# EUROPEAN PATENT APPLICATION

(11) **EP 4 618 465 A1**
(43) Date of publication of application: **17.09.2025**
(21) Application number: 25163801.1
(22) Date of filing: 14.03.2025
(51) Int. Cl.: H04L 5/00, H04W 72/20

(54) **METHOD FOR A WIRELESS COMMUNICATION SYSTEM**

(30) Priority: 14.03.2024 US 202463565092 P
(71) Applicant: ST Engineering iDirect (Europe) Cy NV, 9100 Sint-Niklaas (BE)
(72) Inventor: DELBEKE, Philippe, 2610 Wilrijk (BE); DUYCK, Dieter, 9100 Sint-Niklaas (BE)
(74) Representative: Winger

(57) **Abstract**

The proposed method of communication in a wireless communication system comprising a gateway and one or more terminals, comprises:
- scheduling a first plurality of resource elements for downlink transmission of payload data in a first physical channel with a given power spectral density,
- scheduling a second plurality of resource elements for downlink transmission of broadcast information and/or control information related to said downlink transmission in the first physical channel, in at least a second physical channel with a PSD lower than the given power spectral density, at least a subset of the second plurality of resource elements comprised in the first plurality of resource elements,
- transmitting the payload data in the first physical channel and the broadcast information and/or control information in at least the second physical channel,
- demodulating and decoding in at least one terminal the broadcast information and/or a subset of the control information in the second physical channel,
- demodulating and decoding in said at least one terminal the payload data in the first physical channel based on the demodulated and decoded broadcast information and/or control information.

## Description

### Field of the invention

The present invention is generally related to the field of wireless communications. More in particular, it relates to methods of communication that offer improved protection against eavesdropping and narrowband jamming.

### Background of the invention

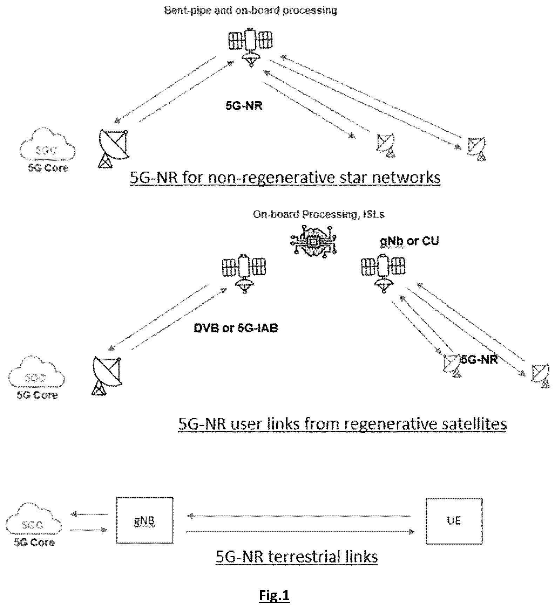

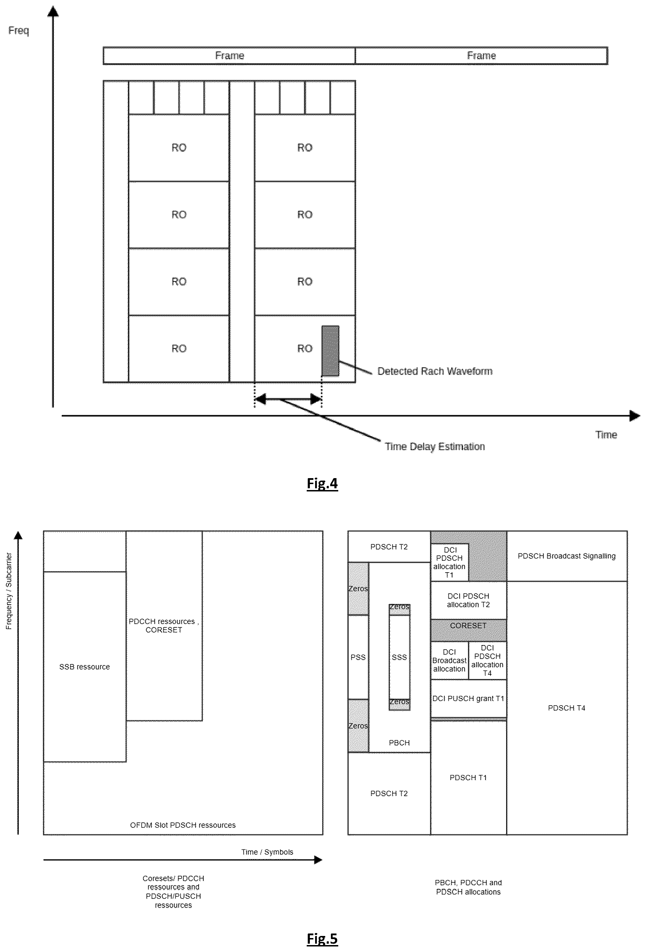

5G-NR (New Radio), and new generations based thereon and standardised by the 3GPP body (e.g., 6G), is an important baseline waveform for satellite-based user links where multiple users are multiplexed in time and frequency (called a multiple access channel). Fig.1 illustrates in a non-exhaustive way three use cases where 5G-NR is relevant. In the top figure a typical realization of a satellite communication network is based on a non-regenerative star network in which a transmitter at the gateway transmits using 5G-NR in the so-called forward (FWD) link via the satellite to multiple user equipments (UEs), also named terminals. In the middle figure regenerative satellites are used, where the hub is in the satellite. In the bottom figure 5G-NR is applied for communication via terrestrial links. This is a non-comprehensive list. Other use cases than satellite communications, for example terrestrial communications, can however be considered.

In a 5G-NR context, the terminology is slightly adapted compared to legacy satcom technologies such as DVB-RCS2. The gateway (also named hub) is typically called the gNodeB (gNB). The gNodeB is a 5G-NR base station organizing the connection with all the terminals or UEs. The gNodeB can be located on the ground in case of bent-pipe (non-regenerative) satellite systems or onboard the satellite in case of regenerative satellite systems. The terminal is called a UE (user equipment). In this description terminal and UE are used interchangeably.

The 5G-NR physical layer standard defines six physical layer channels : three for the forward link transmission (also named downlink transmission, i.e. from the gateway to one or more terminals) :
- the Physical Broadcast Channel (PBCH),
- the Physical Downlink Shared Channel (PDSCH) and
- the Physical Downlink Control Channel (PDCCH),
and three for the return link transmission (also named uplink transmission, i.e. from a terminal towards the gateway):
- the Physical Uplink Shared Channel (PUSCH),
- the Physical Uplink Control Channel (PUCCH) and
- the Physical Random Access Channel (PRACH).
In addition, physical signals are defined, such as the DMRS (DeModulation Reference Signal), PTRS (Phase Tracking Reference signal), PSS/SSS (Primary and Secondary Synchronization Signal), CSI-RS (Channel State Information Reference Signal) and the SRS (Sounding Reference Signal).

All 5G-NR logical channels are ultimately mapped on one or more of the six physical channels and for each channel, time and frequency resources are reserved. The division over the different channels is done by assigning units of an OFDM grid defined by a symbol duration and a related subcarriers frequency bandwidth spacing. A unit of resources comprising a symbol and one subcarrier is called a resource element (RE). The symbol time duration and the subcarrier spacing are defined in function of the numerology. In this disclosure, examples and simulation results are provided for numerology 0 but this is merely one example and the actual numerology being used does not play any role in the presentation of the invention.

Resource elements are allocated to the different channels by the gNB. The three downlink channels, the PUCCH and PUSCH channels are synchronized to the OFDM grid. This means the different transmissions are mutually orthogonal and do not interfere with each other as long as time and frequency misalignments are small. The Cyclic Prefix OFDM (CP-OFDM) transmission guarantees orthogonality of the different transmissions as long as all transmissions are aligned to the OFDM grid.

The PRACH channel transmission is used for logon. Logon is made when the UE turns on from sleep mode, after a handoff to another beam or cell, or when it loses uplink timing synchronization. The PRACH channel is not fully aligned to the OFDM grid due to extra time and frequency uncertainties at the terminal at the moment the PRACH is used. The misalignment means extra time and frequency guard bands are required to guarantee orthogonality and avoid interference in other channels. Although the PRACH channel is not aligned to the OFDM grid, the reserved part of the OFDM grid for PRACH is defined in OFDM resources just like for the other channels. Some use cases are detailed in this disclosure as the problem with higher PRACH misalignments is explained.

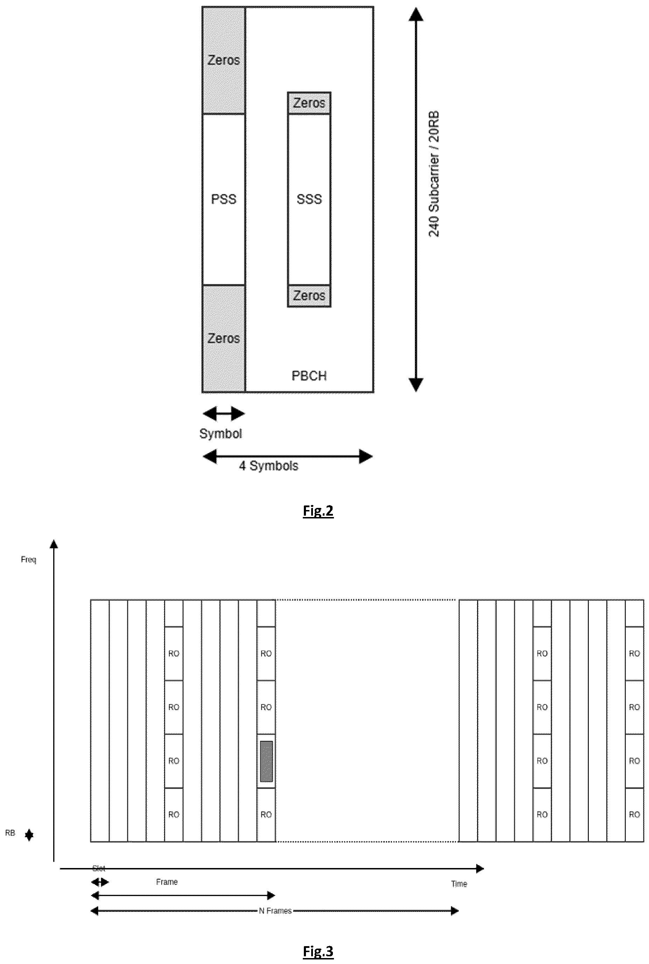

The 5G-NR Synchronization Signal Block (SSB) is used by the UE for initial synchronization to the network and to extract initial network parameters. A new 5G terminal entering the network starts searching in specific bandwidth parts (BWPs) for SSBs. This is called the initial cell search and is standardized for all bands. The SSB is composed of a known primary synchronization signal (PSS), a secondary synchronization signal (SSS) and the Physical Broadcast Channel (PBCH), which is the payload segment. The PSS and SSS are synchronization sequences allowing a wide time and frequency uncertainty search. Each SSB is composed of 4 symbols and 240 OFDM sub-carriers (see Fig.2). For numerology 0 this corresponds to a block with a duration of 0.28ms and consuming 3.6MHz of bandwidth. For higher numerologies, the duration goes down and the bandwidth goes up by factors of 2^{µ} (where µ is the numerology). The SSB is repeated periodically with a period ranging from 5 to 160ms. In some prior art, PBCH is used for SSB and vice versa. The SSB repetition period is configurable in a range from 5 ms to 160 ms. Especially in TNs (terrestrial networks), multiple SSBs can be sent (e.g. to identify beams or MIMO channels) allowing a terminal to select the best one. The exact number of SSBs sent is not relevant for the present disclosure.

In a 5G-NR network the spectrum resources for the forward and the multiple return transmissions are shared in an OFDM grid. The OFDM grid is a multicarrier transmission scheme defining resource elements allocated to one of the channels. Typically, all transmissions are aligned on the same grid and remain orthogonal. This requires each terminal to be accurately synchronized to the network before any uplink transmission can be done.

Terminal initial network entry requires a special procedure in order to achieve this network synchronization. Before fine terminal alignment to the network is achieved, a dedicated channel is foreseen, namely the already mentioned Physical Random Access Channel (PRACH). The full procedure for a terminal entering the network, called the four step RACH in 3GPP networks (because of the four messages), is composed of following steps.
Downlink synchronization comprises :
   - Detection of SSB and decoding of the PBCH and parsing of the Master Information Block (MIB) defining the configuration for System Information Block (SIB1) reception,
   - Monitoring control signalling in coreset0 (which is a special type of coreset used for SIB1 signalling) resources for PUCCH messages indicating the SIB1 position in PDSCH,
   - Reception of the SIB1 message defining all required network parameters including uplink RACH Occasions (RO) that can be used by terminal for logon,
   - The SIB1 also contains information about the exact PRACH method and allowed sequences in a cell.
MSG1 involves sending the PRACH from the terminal to the gNB.
   - After forward synchronization and successful reception of network parameters, the terminal tries to enter the network and sends a PRACH
   - The terminal randomly selects one of the allowed ROs and a Random Access Preamble Id (RAPID). The RAPID is a PRACH sequence randomly selected within a set of 64 allowed sequences signalled by the network.
   - The RO slot where MSG1 is received by the gNB, allows computing a Random Access-Radio Network Temporary Identifer (RA-RNTI) which will be used by the gNB in a response message allowing the terminal to know which RNTI messages to be checked in PDCCH channel (the RNTI is a scrambling ID used in the PDCCH to limit the number of terminals that receive a particular message)
   - At this point the terminal or UE starts listening to the PDCCH where the Cyclic Redundancy Check (CRC) is scrambled by the RA-RNTI
MSG2: the hub allocates PDSCH resource for MSG2 in the PDCCH and sends MSG2 in PDSCH
   - UE receives an allocation of the PDSCH in the PDCCH where the CRC is scrambled by the RA-RNTI
   - The terminal consequently receives the PDSCH containing message MSG2
   - MSG2 comprises a RAPID which allows checking if it corresponds to the MSG1 RAPID, a timing advance measurement, a Temporary Cell RNTI (TC-RNTI) used for control channel information between the gNB and the UE, a first uplink grant PUSCH allocation for next uplink messages,
   - At this point a collision between two terminals is possible as two terminals can have selected the same RAPID and RO and only one is really received by the gNB. In that case, two terminals receive MSG2 and try to use the allocated PUSCH resources (MSG3). This "collision" is solved in message 4, MSG4.
With MSG3 the terminal sends a connection request to the hub in a PUSCH
   - MSG3 is sent in an allocated PUSCH channel; the allocation was granted in MSG2
   - MSG3 contains the terminal's device identity
   - MSG3 is scrambled with TC-RNTI
MSG4: the hub allocates a PDSCH resource for MSG4 in the PDCCH and sends MSG4 in the PDSCH, which is a contention resolution message
   - UE checks its Identity (which can be wrong in the case of a collision, see above)
   - The hub assigns a Cell-RNTI (C-RNTI) to the terminal (which is used as of then for PDCCH communication during this connection in the current cell)
   - From now on the C-RNTI is assigned to the UE and the UE starts listening to the PDCCH where the CRC is scrambled by the C-RNTI
   - The UE or terminal sends an ACK message if the MSG4 Identity corresponds to its device ID Except for the initial PRACH messages, all other messages are aligned to the OFDM grid. So, MSG 1 is only the message that has to cope with the high time and frequency uncertainty. The random access procedure described above is contention based. Also a contention free random access procedure exists (which is e.g. performed after a handoff) only involving the first two messages.

The PRACH waveforms are detailed in 3GPP TS38.211. The PRACH is very flexible, the standard defines more than 700 Random Access Configuration Ids. The supported configuration Ids for a particular gNB are signalled to the terminals. The configuration Ids define allocation slots over time and frequency, but also the PRACH known sequences formats to be used. The bandwidth usage is also PRACH format dependent. The minimal defined bandwidth in current 5G-NR releases uses 6 Resource Blocks (in numerology 0) corresponding to 1080MHz of bandwidth.

All the PRACH known sequences are based on Zadoff-Chu (ZC) sequences. These sequences have some interesting properties:
- The ZC sequences have a constant envelope power which makes them a very robust waveform for non-linearities.
- The FFT of a ZC sequence is a new ZC sequence, so on top of constant envelope power in time, the ZCs have a constant frequency power or flat frequency spectrum.
- All cyclic shifts in time of a ZC sequence form new orthogonal sequences, allowing reuse of the same time shifted sequence by different terminals for logon when the time uncertainty is smaller than the time shift.
- For prime length M ZC base sequences, M-1 orthogonal sequences can be defined with low autocorrelation. The base sequence is referred to as the root sequence in 5G-NR.

In 5G-NR, in some time slots, the resources for the PDSCH (hence, for data) are reduced to free resources for the SSB and PDCCH. Due to the reduced number of PDSCH resources in those slots, the length of the FEC word segments in the data channels is smaller than in other time slots. The changes in FEC efficiencies over consecutive slots result in higher QEF thresholds. In terrestrial communications, this is less of an issue than in satellite communication through the application of Hybrid ARQ (HARQ) and the nominal operation at a frame error rate (FER) of 1e-1. In satellite communications, however, (H)ARQ is not possible due to latency requirements and the FER operating point must therefore be at 1e-5 or lower. Due to the unequal lengths, the worst case QEF threshold is considered in the selection of the modulation and coding type. It would thus be advantageous to have a more consistent PDSCH resource allocation over consecutive slots. This problem and need are also relevant for terrestrial communications.

The Cyclic Prefix (CP) is a smart feature that transforms delay errors (detector time errors) in channel dependent phase errors in receiver without causing any inter-symbol interference (ISI) as long as delay misalignments are smaller than the CP length and without any SNR loss. The delay errors can then be corrected via simple equalization and the receiver complexity is lower. The only cost is the reduced spectral efficiency due to the CP overhead. The CP was introduced in other OFDM multicarrier waveforms such as Digital Subscriber Line modulation, often referred to as DMT modulation, and Wi-Fi networks. In 3GPP standards such as 5G-NR the Cyclic Prefix (CP) was introduced for two reasons. First, the CP results in a zero intersymbol interference (ISI) on multi-path channels as long as the multi-path delay spread is smaller than the CP duration. Second, the CP allows for some time misalignment between different terminals or between transmitter and the receiver (e.g. due to mobility and clock differences) without introducing ISI. The latter also simplifies the receivers demanding a less accurate symbol timing recovery. As said above, the main drawback is the CP overhead resulting in 6.6% efficiency loss in the case of 5G-NR. However, for satellite channels, there is typically no multipath effect resulting in a good timing alignment between transmitter and receiver and between the different terminals. Consequently, the main drivers for CP introduction disappear. As explained further, there is also a security problem with the CP repetition pattern, allowing eavesdropping receivers to achieve symbol synchronization easily. It is therefore an object of the invention to propose an extension of 5G-NR without CP. This problem and need is also relevant for terrestrial communications.

The PRACH waveform is fundamentally different from all other channels in the OFDM grid. The PRACH waveform is the only allowed transmission that is not fully aligned on the OFDM grid and the selected numerology. For example, the Format 0 PRACH waveform is generated as a frequency domain Zadoff-Chu (ZC) sequence with subcarrier spacing (SCS) of 1.25kHz. So strictly speaking the RACH waveform is not on the same OFDM grid as all other transmissions. However, the resources reserved for RACH are defined on the active OFDM grid. The RACH waveform is composed of one or more repeated symbols plus a CP that allow simple detection. The RACH CP is typically longer than for the other channels. The default 5G-NR detection does not perform well as soon as the timing uncertainty exceeds the CP length. The zero cyclic shift autocorrelation property of the ZC sequences is exploited in 5G-NR. When timing uncertainty is limited, the same sequence can be reused with a different cyclic shift. Unfortunately, this cannot be exploited in Non-Terrestrial Networks (NTN) scenarios as the expected timing error uncertainty can be much larger than the sequence duration. NTN links have longer link delays. Next to the absolute longer delay, the expected delay uncertainty is a main challenge and is much higher than in terrestrial 5G networks. Next, the radio frequencies are also higher, resulting in higher uncertainties because of reference clock tolerances or mobility effects. The main NTN RACH requirement or uncertainties that result from the communication over satellite are summarized in Table 1 below. They can be retrieved from 3GPP report TR38.821.

**Table 1**

| Uncertainty | | Requirement |
|---|---|---|
| Timing uncertainty over satellite (max differential delay) | | At most 10ms |
| Frequency uncertainty | over GEO | At most 30kHz |
| | over LEO | +- 750 kHz |

3GPP release 17 assumes GNSS and satellite orbit data are available allowing pre-compensation and limiting the initial time and frequency uncertainties to the uncertainties seen in terrestrial communications. This comes with a certain complexity that may be undesired. Further there is also a more fundamental problem in the case GNSS signals are not accurate or not available (e.g. due to jamming). The PRACH sequences are so designed that the time delay is measured by the difference between the RACH occasion slot start time and the arrival time of the PRACH sequence. The problem with this approach is that it does not scale to higher time uncertainties. Higher time uncertainties require large PRACH occasions slots resulting in poor spectral usage. The current PRACH waveform is designed for terrestrial environments with typical time uncertainties up to 100µs. The allowed time ambiguity is limited because of several reasons. First, the PRACH is a slotted waveform, i.e., RACH occasion slots must cover the entire uncertainty (see Table 1). Next; there is a cyclic re-use of ZC sequences and the timing recovery without ambiguity to detect another cyclic shifted sequence is limited. Further, a relatively high BW logon waveform (i.e., >1 MHz) becomes inefficient when time uncertainty is large. Fig.3 shows a sample reservation of RACH occasion resources of a TN 5G-NR OFDM grid in terrestrial conditions with limited time uncertainty. In order to cope with higher time uncertainty, the RACH occasion slots reservations can be made longer in time (and frequency) consuming a lot of resources as shown in Fig.4. One can see a much larger part of the resources is reserved for the same amount of RO. This thus results in a lot of wasted resources. Such an inefficiency calls for a solution. This problem is mainly relevant for satellite communications.

Despite the attention to security in the higher 5G layers, the 5G-NR standard has several weaknesses from a security and robustness point of view on the physical layer. The PBCH is a broadcast channel and acts as a "front door of the house" for the entire network of hub and terminals, as it exposes essential network information that allows terminals to synchronize to the network (e.g. align with the 5G-NR frames). For instance, the PBCH contains the Master Information Block (MIB). The MIB contains essential information about the network. This includes the subcarrier spacing or numerology, the DRMS types and position for other channels and the coreset1 position allowing receiving PDCCH messages and receiving SIB1. After reception of the PBCH and parsing of the MIB, the SIB1 can be received on the PDSCH. The SIB1 contains all essential info for UE network entry. This includes other coresets (control resource sets) and search spaces with control information, uplink bandwidth part (BWP) configuration and RACH configuration for logon. Next, all other SIBs than SIB1 can also be received. Other SIBs contain higher layer network information about other cells, timing information or even satellite orbit information (SIB19). MIB and SIBs are transmitted periodically over the network. It is thus essential that an adversary cannot retrieve the PBCH. Unfortunately, the SSB, comprising the PBCH, can be easily detected, e.g. just by analyzing the spectrum. Keeping the position of the SSB secret is of little help as the spectral shape of the SSB (see Fig.2) is easy to find due to the zeros around the PSS and SSS frequency allocations. Even with unknown (randomized) PSS/SSS sequences, the PSS/SSS position could be retrieved or learned from the spectrum. The SSB is not very wideband (e.g. 3.6 MHz as explained above) and its location needs to be known by the network and can consequently easily be jammed. Reliable SSB acquisition is only possible down to -5 dB (possibly down to -10 dB with side information (e.g. knowing the cell ID (CID)), which is not so jamming resilient either. The SSB frequency uncertainty is typically limited to less than a subcarrier. Searching in a larger range is possible but consumes lots of CPU or hardware resources and yields more false detections. The PBCH only works down to -5 dB. In general, a more robust SSB might be desired in harsh very low SNR circumstances. As the SSB is the "front door" of the 5G-NR system, it should be much better protected. There is thus a need for the SSB to be more resilient to narrowband jamming, more resilient to eavesdropping and more robust against high time and frequency uncertainties as well as very low SNR conditions. This problem and need are also relevant for terrestrial communications.

A control resource set (coreset) is a reserved set of physical resources in the time-frequency OFDM grid for the PDCCH. There can be multiple coresets per BWP, not consuming the full bandwidth. The PDCCH channel contains the DCI messages signalling downlink assignments for PDSCH and the uplink grants for PUSCH. The DCI is the Downlink Control Information which is a packet of data carrying control information from the gNodeB to the UE. The PDSCH resource allocation is communicated through the DCI messages indicating a start slot, a start symbol, a length, and a PDSCH mapping type. The assigned downlink resource can either be in the same slot wherein the PDCCH is received or in a following slot. The number of slots between the DCI reception and the DL allocation is defined by the k0 parameter in 5G-NR. In the examples hereafter it is assumed k0=0, meaning the DCI and the PDSCH allocation come in the same slot. The particular k0 value is however relevant in the present disclosure. Fig.5 illustrates a sample slot resource allocation of downlink channels in Frequency Division Duplexing (FDD). FDD is preferred over Time Division Duplexing (TDD) in satellite channels because of the long link delay. The long link delays force to introduce long guard intervals between downlink and uplink transmissions in TDD mode, making TDD mode less efficient than FDD mode. The left part of Fig.5 shows the allocation to the SSB, PDCCH and PDSCH for the downlink. The right part shows the different transmission blocks. T1, T2, T3, ... in the figure denote terminals 1, 2, and 3, respectively. The SSB and PDCCH are both downlink channels (i.e., from hub to terminal). Fig.5 shows a typical allocation for the SSB and a coreset. Both the SSB and the coreset can be detected by an adversary receiver due to the idle transmissions (grey areas of Fig.5) containing zero power. The PDCCH control channel thus also presents some weaknesses similar to the SSB discussed above, i.e., the coresets and PDCCH transmission can be easily detected on the spectrum. On top of the potential spectrum visibility, the PDCCH packages are very short as the DCI information is composed of very small packets of several possible formats. This makes strong encryption difficult. 5G-NR PDCCH has the RNTI concept that allows a terminal to identify which DCI packet is intended for itself and not for other terminals. The RNTI is implicitly encoded in the CRC scrambling check of the DCI packets. This cannot be used as a security measure. The regular UE does not use wrong CRC packets and does not need to differentiate wrong packet from packets for other UEs. However, an adversary receiver can decide to process DCI messages with all possible RNTIs, learn the link RNTI and so obtain information about the network activity to the different UEs. This problem and need are also relevant for terrestrial communications.

On the uplink, the PUCCH channel has similar weaknesses to the PDCCH. The PUCCH comprises Uplink Control Information (UCI) messages in reserved resources on the OFDM grid; it uses similar RNTI CRC encoding and is also composed of very short packets. This problem and need are also relevant for terrestrial communications.

Next to overhead cost, the CP presents a security weakness. The CP can be used by the receiver for symbol alignment algorithms. Indeed, the repetition of the CP segment in each symbol can be exploited for symbol edge detection. This extra repetitive information can also be used by adversary receiver for network symbol synchronization. Symbol synchronization is a first step needed by a legitimate receiver to lock to the signal from a transmitter and for observation of the network activity. A regular OFDM receiver does not use the CP segment energy for reception. The CP just guarantees symbol orthogonality even when not fully time aligned. A more advanced receiver can also use the CP for improved SNR compared to a regular receiver, hereby improving its link budget. This problem and need are also relevant for terrestrial communications.

As mentioned above, the logon operation relies on accurate GNSS information at the terminal as the existing PRACH waveform can only cope with limited time and frequency search ranges. The limited search range requires accurate terminal position knowledge to pre-compute the offsets and limit the residual uncertainty. Hence, an adversary can make the logon procedure fail by jamming or spoofing the GNSS signals, which is a security weakness. Second, the PRACH waveform can be detected by all terminals in the network, including adversary receivers. The weakness is that the observed PRACH waveform can disclose information about the terminal identity and the terminal position. More specifically, an eavesdropper can observe the RACH signal and measure the terminal delay. The full terminal identity cannot be known to eavesdropper easily and is never exchanged in clear text. However, the link delay estimation allows deriving information about the terminal position and the link RNTI allows relating traffic uplink and downlink allocations to particular terminals. The PDCCH is encoded via RNTI. Adversary terminals can decode all RNTIs on the network by observing the control channel and map all network activity. Once logged on, different RNTI connections can be extracted by control channel monitoring. There is thus a need for an improved logon procedure and/or waveform to address those security and robustness weaknesses. This problem and need are also relevant for terrestrial communications.

Hence, there is a clear need to address one or more of the above-mentioned technical problems.

### Summary of the invention

It is an object of embodiments of the present invention to provide for a method of wireless communication that offers improved resilience against eavesdropping and narrowband jamming.

The above objective is accomplished by the solution according to the present invention.

In a first aspect the invention relates to a method of communication in a wireless communication system comprising a gateway and one or more terminals. The method comprises:
- scheduling a first plurality of resource elements for downlink transmission towards the one or more terminals of payload data in a first physical channel with a given first power spectral density,
- scheduling a second plurality of resource elements for downlink transmission broadcast information and/or of control information related to the downlink transmission of the payload data in the first physical channel, in at least a second physical channel with a power spectral density lower than the given first power spectral density, at least a subset of said second plurality of resource elements being comprised in said first plurality of resource elements, thereby at least partially hiding at least the second physical channel below the first physical channel,
- downlink transmitting the payload data in the first physical channel and the broadcast information and/or control information in the second physical channel,
- demodulating and decoding in at least one terminal of the one or more terminals the broadcast information and/or a subset of the control information in the second physical channel,
- demodulating and decoding in the at least one terminal at least a subset of the payload data in the first physical channel based on the demodulated and decoded broadcast information and/or control information.

In this first aspect is presented a method for downlink communication from the gateway towards the one or more terminals. The proposed solution indeed offers improved protection against eavesdroppers. This is achieved by using in at least the second physical channel a lower power spectral density (PSD) for the communication of the broadcast information and/or control information related to the transmission of the payload data, than for the transmission of said payload data in the first physical channel. In case both broadcast information and control information are present, there is also a third physical channel so that there is one physical channel for the broadcast information and one physical channel for the control information. The second physical channel and, if present, the third physical channel are in other words at least partially hidden below the first physical channel. The second and third physical channel so each become a secure channel. It is to be noted that demodulation and decoding of the part of the payload data in the first physical channel intended for one of more terminals of the communication system is not possible without having the control information (or more precise, the subset of the control information for the one or more terminals in question) from the second secure channel available. To demodulate and decode the second physical channel, i.e. the secure channel, information about the secure channel codes and structure (e.g., the LSS as described further) is required.

In a preferred embodiment the first physical channel is the Physical Downlink Shared Channel and the second physical channel is a secure Physical Downlink Control Channel that transmits at a lower PSD than a conventional, standardized 5G Physical Downlink Control Channel. As a consequence, the PSD is also lower than the Physical Downlink Shared Channel. The secure Physical Downlink Control Channel however remains compatible with the 5G-NR waveform. More specifically, the transmission system can also downlink transmit a standardized Physical Downlink Control Channel simultaneously with the secure Physical Downlink Control Channel whereby one or more terminals receive the standardized Physical Downlink Control Channel and one or more other terminals receive secure Physical Downlink Control Channel.

In another preferred embodiment the first physical channel is the Physical Downlink Shared Channel and the second physical channel is a secure synchronization signal block comprising a secure Physical Broadcast Channel and a secure synchronisation signal arranged to transmit at a lower PSD than a conventional, standardized 5G Physical Broadcast Channel. The secure synchronization signal block as proposed remains compatible with a 5G-NR waveform. More specifically, the transmission system can also downlink transmit a standardized synchronization signal block simultaneously with the secure synchronization signal block whereby one or more terminals receive the standardized synchronization signal block and one or more other terminals receive secure synchronization signal block.

In a preferred embodiment a secure synchronization signal block is transmitted in said second physical channel comprising a long synchronization signal, LSS, and a secure payload segment being a secure Physical Broadcast Channel, said secure payload segment comprising additional coded bits. Hence, the secure Physical Broadcast Channel can be received at lower SNR conditions or increased interference conditions.

In one embodiment the secure payload segment in the second physical channel comprises downlink control information.

Advantageously the secure synchronization signal block occupies one slot of 14 symbols. In other embodiments the secure synchronization signal block occupies more than one slot of 14 symbols.

In some embodiments the secure synchronization signal block and/or Physical Downlink Control Channel occupies a number of resource blocks equal to the number of resource blocks in the transmission bandwidth.

In an embodiment the long synchronization signal (LSS) is a block of contiguous resource elements or is distributed in a plurality of blocks of contiguous resource elements.

In preferred embodiment the secure synchronization signal block is combined with a standardized synchronization signal block. The secure synchronization signal block is transmitted using a lower PSD than the standardized synchronization signal block. The standardized synchronization signal block typically has a power spectral density aligned with the other standardized channels, i.e. the physical downlink shared channel.

In a further embodiment more than one secure synchronization signal block is transmitted, each having a different LSS.

In some embodiments the downlink transmission is performed using one or more beams from a transmission point apparatus, and wherein a signal transmitted on each beam of said one or more beams comprises a secure synchronization signal block, each secure synchronization signal block having a different LSS.

In one embodiment the secure payload segment in the second physical channel further comprises DeModulation Reference Signal, DMRS, symbols.

In some embodiments the LSS and the DMRS symbols change every slot.

In some embodiments at least one of the terminals receives a standardized synchronization signal block or a standardized physical downlink control channel and at least one other terminal receives the secure synchronization signal block or the secure physical downlink control channel.

In another aspect the invention relates to a method of communication in a wireless communication system comprising a gateway and one or more terminals. The method comprises:
- scheduling a first plurality of resource elements for uplink transmission from the one or more terminals towards the gateway of payload data in a first physical channel with a given first power spectral density,
- scheduling a second plurality of resource elements for uplink transmission in at least a second physical channel logon and/or a subset of uplink control information with a power spectral density lower than the given first power spectral density, at least a subset of said second plurality of resource elements being comprised in said first plurality of resource elements, thereby at least partially hiding the second physical channel below the first physical channel,
- signalling the first and second plurality of resource elements from the gateway to the one or more terminals,
- uplink transmitting in one or more of the terminals-the payload data in the first physical channel based on the signalled first plurality of resource elements,
- uplink transmitting the logon information and/or a subset of uplink control information in the second physical channel with a power spectral density lower than the given first power spectral density based on the signalled second plurality of resource elements,
- demodulating and decoding the payload data in the first physical channel using the first plurality of resource elements,
- demodulating and decoding the logon and/or a subset of uplink control information in the second physical channel using the second plurality of resource elements, said logon and/or a subset of uplink control information being at least partially hidden by the first physical channel.

This aspect of the invention presents a method for uplink communication from the one or more terminals towards the gateway. As the scheduling operations are performed at the gateway side, the method for uplink communication comprises an additional step compared to that for downlink communication. The scheduled first and second plurality of resource elements need to be signalled from the gateway to the one or more terminals. However, the concept applied in the uplink direction to achieve the improved protection against eavesdropping is the same as for the downlink method described above. In the second physical channel a lower power spectral density (PSD) for the communication of logon information or a subset of uplink control information is used than for the transmission of said payload data in the first physical channel. The subset of uplink control information comprises the PDSCH allocation of resources to be received by the terminal(s) and PUSCH grants indicating the resources reserved for transmission by the terminal. In case both logon information and a subset of the uplink control information are to be transmitted, there is a third physical channel so that the logon information and the subset of uplink control information each have a channel available. Again, the second (and, if present, third) physical channel can be said to be at least partially hidden below the first physical channel. The second (and third) physical channel so becomes a secure channel. Demodulation and decoding of the first physical channel is not possible without having the logon and/or a subset of uplink control information from the second secure channel available. To obtain information about the secure channel codes and structure it is required to be able to demodulate and decode the second physical channel, i.e. the secure channel.

In a preferred embodiment the first physical channel is a Physical Uplink Shared Channel and the second physical channel is a secure Physical Uplink Control Channel that transmits at a lower PSD than a standardized 5G Physical Uplink Control Channel. The transmission system may comprise in some embodiments one or more terminals (UEs) uplink transmitting a standardized Physical Uplink Control Channel while one or more other UEs uplink transmit a secure Physical Uplink Control Channel in the same network.

In another preferred embodiment the first physical channel is a Physical Uplink Shared Channel and the second physical channel is a secure Physical Random Access Channel that transmits at a lower PSD than a conventional, standardized 5G Physical Random Access Channel. The transmission system may comprise one or more terminals uplink transmitting a standardized Physical Random Access Channel while one or more other UEs transmit a secure Physical Random Access Channel in the same network.

In some embodiments at least one of the terminals transmits a standardized Physical Random Access Channel or a standardized Physical Uplink Control Channel and at least one other terminal transmits the Physical Random Access Channel at the lower power spectral density or the physical uplink control channel at the lower power spectral density.

In an embodiment the first plurality of resource elements comprises all resource elements available in the transmission bandwidth.

In advantageous embodiments the power spectral density in the second physical channel is at least 5 dB lower or at least 10 dB than the given power spectral density.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates some use cases where 5G-NR is relevant.
Fig.2 illustrates the standardised 5G SSB block.
Fig.3 illustrates resource allocation with ROs and PRACH transmission with small time delay uncertainty.
Fig.4 illustrates a resource allocation with ROs and PRACH transmission with high time delay uncertainty.
Fig.5 illustrates an example RE allocation on a downlink showing how all SSB resources and Coreset resources can be observed and received by adversary receivers.
Fig.6 illustrates a typical SSB reception chain.
Fig.7 illustrates an example secure SSB composed of LSS, DMRS and SPBCH resources.
Fig.8 illustrates an example SSSB reception chain.
Fig.9 illustrates SSSB Mode 1 detection and SPBCH decoding simulated performance.
Fig.10 illustrates SSSB Mode 2 detection and SPBCH decoding simulated performance.
Fig.11 illustrates SSSB Mode3 detection and SPBCH decoding performance.
Fig.12 illustrates overlapping unicast SSSB with lower power spectral density than the PDSCH resources.
Fig.13 illustrates SSSB detection and SPBCH decoding performance for an SSSB block with LSS resources concentrated as a preamble in the first symbols of the SSSB.
Fig.14 illustrates 20 RB, LSS sequence split in 2 parts.
Fig.15 illustrates 20 RB, LSS sequence split in 4 parts.
Fig.16 illustrates 20 RB, LSS sequence split in 6 parts.
Fig.17 illustrates SSSB detection (top) and SPBCH decoding performance (bottom) for 20 RB and 14 symbol comparing performance of LSS split in 2,4 and 6 segments.
Fig.18 illustrates 36/72 RB SSSB detection and SPBCH decoding performance.
Fig.19 illustrates SSSB with an LSS sequence split in 8 equal subsequences and spanning 40 symbols.
Fig.20 illustrates PDCCH allocation in coresets of 2 and 3 symbols as standardised in 5G Release 17.
Fig.21 illustrates PDCCH structure consuming 3 symbols and composed of 4 CCEs as standardised in 5G Release 17.
Fig.22 illustrates SPDCCHP FEC performance in function of SNR and aggregation level for payload size of 32 and 128 bits.
Fig.23 illustrates SPDCCH size extension from 2, 3 to 6 and 12 symbols for 1 and 2 CCEs.
Fig.24 illustrates SPDCCH embodiment with aggregation level 32 and consuming 12 symbols.
Fig.25 illustrates SPDCCH embodiment with 14 symbols.
Fig.26 illustrates SPDCCH full demodulator performance for 32 bits payload and different aggregation levels. (dotted lines for genie aided performance and full lines for full receiver performance)
Fig.27 illustrates a terminal logon procedure indicating usage of the SPBCH and SPDCCH.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention discloses various techniques for obfuscating signal waveforms used in wireless communication systems, so that they are better protected against eavesdroppers. Some aspects of the invention bring more value in a satellite communications context, while other parts are equally useful in terrestrial communications and satellite communications.

The description often refers to a standard or standardised waveform hereby meaning 3GPP standardised 5G-NR waveforms and all its evolutions where the security improvements are applicable (e.g.,6G).

In advanced communication networks like 5G networks, the physical layer resources are allocated to different physical channels. These can be broadcast channels, control channels and/or payload channels. A broadcast channel signals all network information allowing a terminal to synchronize to the network. A control channel signals essential information indicating the payload channels resources allocated to each transmission. In a 5G context, the broadcast channel is the PBCH, the control channel is the PDCCH and the payload channels are the PDSCH for downlink and PUSCH for uplink. The payload channels cannot be received easily without broadcast and control channel information because without control channel information the exact payload channel allocation is not known. It is a key feature of the invention to hide the broadcast and control channels by transmitting the broadcast and control channels overlapping with the payload channels with a lower power spectral density than the payload channels. This makes the broadcast and control channel difficult to detect and receive for adversary receivers.

Having the control and broadcast channels overlapping or partially overlapping with the payload channels does not prevent the receiver from receiving the waveform. However, security can now further be enhanced by keeping the format and the synchronisation sequences required for broadcast and control channel detection secret. The secrets should only be known to the intended terminals.

Typically, a network also requires means for terminal logon. A terminal typically signals its desire to enter the network via a logon sequence. In classical networks like 5G networks or other satellite networks, time and frequency resources are reserved for logon. The logon resources present similar weaknesses in the sense that those can be observed and detected by adversary terminals, so allowing monitoring of the network activity. As a variation, the logon waveforms can be transmitted on top of the uplink channel resources with a lower power spectral density. Similarly, this makes the logon waveforms difficult to detect by adversary terminals. The uplink traffic channel was already difficult to receive by adversary terminals because the 'hidden' control information is lacking.

In 3GPP standardised 5G technology, the broadcast channel is based on the SSB block comprising the PBCH channel. The control channel is based on the PDCCH for downlink and the PUCCH for uplink. The logon channel is called the PRACH.

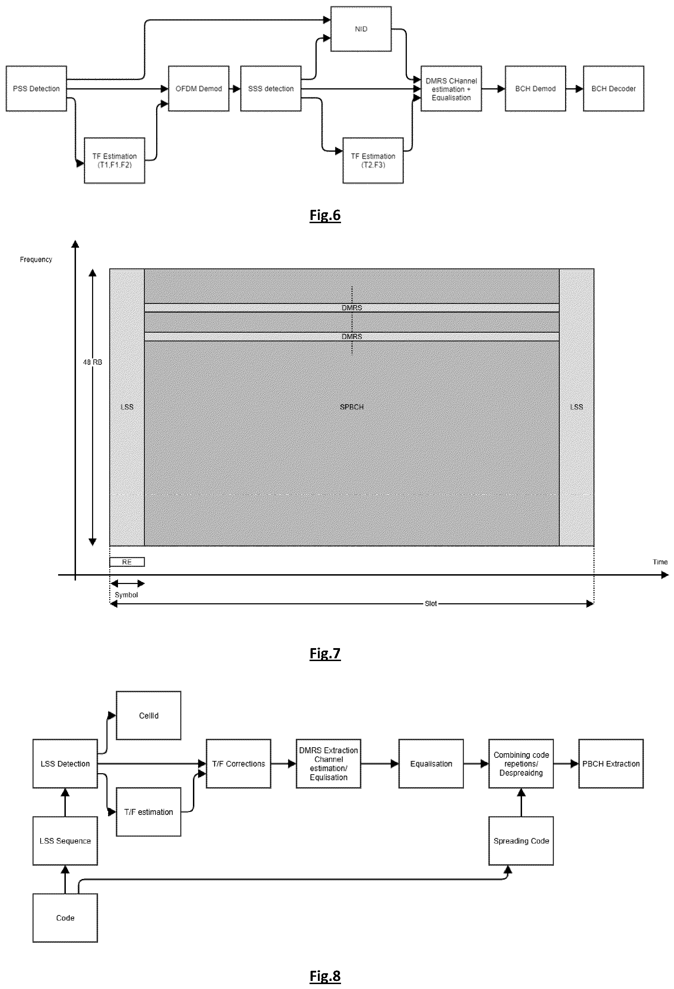

The first step in the UE network entry is the detection of the Synchronization Signal Block (SSB) and decoding of the PBCH. The SSB detection also results in time and frequency offset estimations. The SSB comprises a primary and secondary synchronization sequence (PSS and SSS, respectively). These sequences depend on the Cell ID (CID). The UE tries to detect all possible sequences. This allows the UE to directly detect the CID. It also allows the UE to signal which cell or beam was received with the best link budget. Fig.6 shows a typical receiver for the SSB, which will be explained below. The UE network synchronization based on receiving the SSB is detailed below.

A first step is the PSS detection. In this step, a brute force correlation search on the three possible PSS sequences is performed. The possible PSS sequences are standardized in 5G. They give following information: a Coarse Frequency offset estimate (F1), the detected PSS, which will allow CID determination, a Fine Frequency offset estimation via PSS CP correlation (F2), and a PSS Time estimation (T1). The above detections allow a first frequency and time correction and allow performing the FFT without ISI and ICI in the OFDM demod.

After PSS detection, the SSS sequence can be detected on the expected position. The SSS can be one of 336 possible sequences. The detected PSS+SSS sequence defines the cell ID (CID). This allows the UE to identify the received cell or beam based on the detected SSB. In this second step following information is available: SSS detection and decoding, the detected SSS block, (so the CID is known), improve time frequency estimation (F3), and improved time estimate T2 based on PSS/SSS (T2).

Finally, in a last synchronization step, the DMRS symbols in the PBCH symbols segment are detected and estimated. After equalization and time correction, the receiver is ready for the PBCH decoding step to extract the MIB. The last synchronization step yields the timing improvement based on DMRS (T3) and the DMRS allows channel equalization and PBCH MIB decoding. The MIB is encoded using a polar code encoding 32 bit over 432 QPSK symbols distributed over the SSB symbols 1,2 and 3. The 432 QPSK symbols are mapped on 432 REs. Symbol 2 is shared with SSS resources and that 1/4 DMRS overhead is included.

The PBCH contains the MIB. The MIB contains essential information about the network. This includes the DMRS types and position for other channels, SIB1 subcarrier spacing or numerology, the SIB1 configuration (coreset and search space for SIB1 reception) and the System Frame number (SFN).

The SIB1 can then be received on the PDSCH. SIB1 contains all essential info for UE network entry. This includes other coresets and search spaces with control information, uplink BWP configuration and the RACH configuration. Next all other SIBs can be received. Other SIBs contain higher layer network information about other cells, timing information or even satellite broadcast information (SIB19). The MIB and SIB are transmitted periodically over the network. Once connected, the SSB can be continuously tracked for further time and frequency corrections.

A new 5G terminal entering the network starts looking for an SSB in specific bandwidth parts (BWPs). This is called the initial cell search and is standardized for all frequency bands. As an example embodiment a new wideband SSB is defined consuming the whole BWP and overlapping with PDSCH transmission to improve robustness and security (anti-jamming and anti-eavesdropping). The new wideband SSB is denoted the secure SSB (SSSB).

One wants to transmit the SSB "below" the other transmissions (e.g. below the PDSCH) in the spectrum. So, the SSB needs to be transmitted with a lower power spectral density (PSD) than the PDSCH. Hence, the SSSB sees the other transmissions as noise and the PSD of that "noise" is much higher than its own PSD, which is denoted VLSNR (very low SNR) operation. Hence, three problems must be solved to allow for the use of SSSB. First, there must be enough synchronization resources to allow detection at VLSNR. Second, the FEC must be strong enough for decoding at VLSNR. Third, there must be enough known resources for equalization in VLSNR condition.
The requirements are detailed below
- The SSSB should not be visible on a spectrum analyzer
- It should work in VLSNR operation, preferably down to -20dB SNR
- PDSCH transmissions can be sent "above" the SSSB transmissions, i.e. with a higher PSD,
- The SSSB comprises a secure PBCH (SPBCH) which needs to have the same payload as in regular 5G, e.g. containing MIB data, to guarantee compatibility with higher layers.

Fig.7 shows an example resource allocation for the SSSB (showing the long synchronization sequence (LSS), Demodulation Reference Signal (DMRS) and SPBCH). In this example, one slot of 14 OFDM symbols is shown with 576 subcarriers, constituting 48 resource blocks (RBs). Only two DMRS sequences are shown but there can be more DMRS sequences. The other REs are part of the SPBCH FEC symbols. This resource allocation can be extended to other bandwidths with less RBs or more RBs, as described further below. It is now explained why this new SSSB waveform achieves the requirements mentioned above.

In the example embodiment an LSS sequence is used, and the SSSB detection algorithm is illustrated in Fig.8. In this embodiment the known LSS symbols are used for detection and first coarse time and coarse frequency offset estimation. Optionally, multiple LSS sequences can be detected allowing determining the received Cell ID (similarly to the CID determination based on PSS/SSS sequences in standardised 5G.) The coarse time and frequency offset estimations are further applied and followed by DMRS based channel estimation and equalisation. Finally, the payload symbols are despread before decoding. In another embodiment, the despread function is just combining FEC codeword repetitions. The latter actually corresponds to a spreading code of all ones.

In the SSSB, the SSS and PSS sequences are replaced by a long synchronization sequence (LSS), which can be a randomly chosen QPSK sequence. The LSS sequence is in some embodiments read from a cryptographic module as part of a TRANSEC scheme. For easier detection of the LSS, the LSS sequence is assumed to be known in the UE. In a further embodiment multiple LSS sequences can be defined, which allows encoding the Cell ID in the LSS (similarly to the Cell ID encoding the PSS and SSS sequences). This only comes with some extra complexity for legitimate receivers that have to search for more predefined LSS sequences.

More embodiments are presented below. Also it is shown that splitting the LSS in two parts, separated by having DMRS symbols in between, is a preferred solution. Just like in standard 5G SSB, the DMRS symbols are kept in the SSSB. The two drivers for keeping the DMRS symbols are (1) the fact that the DMRS overhead and channel estimation performance are aligned between SSSB and control channel SPDCCH (defined further) and (2) the DMRS can be used as known symbols that can be combined with the LSS for improved detection performance. The DMRS overhead is also used for equalization. Next to the LSS and the DMRS symbols, the SSSB also has, just like the SSB, a payload segment comprising symbols (referred to as FEC symbols) mapped from coded bits. For the SSB, this payload segment is denoted PBCH. In this disclosure, for the SSSB, the payload segment is denoted as SPBCH. The encoding scheme from the legacy PBCH (i.e., as standardized in 5G) is reused. The coded symbols are repeated a few times (corresponding to a repetition code) to have a better decoding threshold. Obviously, other or better codes than repetition codes can be used for more coding gain. It is well known, however, that, at very low SNR, repetition codes are close to optimal.

In case an SSSB transmission in a single slot consuming the whole bandwidth is not sufficient to achieve the target performance, more energy is needed in the SSSB transmission to lower the decoding thresholds. As the whole available bandwidth is consumed, the SNR performance can only be improved by extending the SSSB over a longer time period. This requires going beyond the single slot boundary. Going above the slot boundary of 14 symbols with a single transmission is an important extra complexity for the UE detection algorithms and should be avoided. Allowing more than 14 symbol duration for SSB results in optimal performance. It is further presented further as 'mode3'.

As most of the broadcast channel is static information, there is a possibility that several transmissions of the SPBCH constitute repetitions. Obviously, the repetitions could be improved by adding additional coded bits lowering the code rate. In some embodiments, this gives more coding gain than plain repetitions, although it is well known that for very low SNR regimes, repetitions are very close to optimal. The invention is not limited to applying repetitions. The repetitions can thus be combined to improve the FEC performance. Each slot comprising an SSSB must still contain enough LSS symbols for proper detection but multiple payload symbols across slots can be combined before decoding.

Exploiting repetitions across slots comprising an SSSB allows an SSSB waveform definition with a higher LSS overhead per slot comprising an SSSB to facilitate detection but less FEC repetitions within a single slot (i.e., less symbols for the SPBCH in a single slot) slot as FEC blocks can be combined over consecutive slots comprising an SSSB to achieve the required very low SNR operation level. In this particular solution the SPBCH payload needs to remain constant over the slots comprising an SSB that are to be combined. More specifically, the constant SPBCH payload requires the system frame number to be constant across those slots.

5G-NR supports a number of bandwidths. The 5G-NR standard foresees a wide range of supported bandwidth and numerology combinations (see Table 2 and Table 3 below, which are extracted from 3GPP standard documents 3GPP TS 38.101-1 V17.16.0 (2024) and specify the number of RBs used per bandwidth part in function of bandwidth and numerology for frequency ranges 1 (FR1, 410 MHz to 7125 MHz ) and 2 (FR2, 24.25 GHz to 71.0 GHz). To accommodate the widest possible bandwidths, a range of RB usages must be supported by the SSSB and the SPDCCH.

**Table 2 : FR1 maximum transmission bandwidth configuration N_{RB} as a function of SubCarrier Spacing SCS**

| **SCS (kHz)** | **5 MHz** | **10 MHz** | **15 MHz** | **20 MHz** | **25 MHz** | **30 MHz** | **35 MHz** | **40 MHz** | **45 MHz** | **50 MHz** | **60 MHz** | **70 MHz** | **80 MHz** | **90 MHz** | **100 MHz** |
|---|---|---|---|---|---|---|---|---|---|---|---|---|---|---|---|
| | **N_{RB}** | **N_{RB}** | **N_{RB}** | **N_{RB}** | **N_{RB}** | **N_{RB}** | **N_{RB}** | **N_{RB}** | **N_{RB}** | **N_{RB}** | **N_{RB}** | **N_{RB}** | **N_{RB}** | **N_{RB}** | **N_{RB}** |
| 15 | 25 | 52 | 79 | 106 | 133 | 160 | 188 | 216 | 242 | 270 | N/A | N/A | N/A | N/A | N/A |
| 30 | 11 | 24 | 38 | 51 | 65 | 78 | 92 | 106 | 119 | 133 | 162 | 189 | 217 | 245 | 273 |
| 60 | N/A | 11 | 18 | 24 | 31 | 38 | 44 | 51 | 58 | 65 | 79 | 93 | 107 | 121 | 135 |

**Table 3 : FR2 maximum transmission bandwidth configuration N_{RB}**

| **SCS (kHz)** | **50 MHz** | **100 MHz** | **200 MHz** | **400 MHz** | **800 MHz** | **1600 MHz** | **2000 MHz** |
|---|---|---|---|---|---|---|---|
| | **N_{RB}** | **N_{RB}** | **N_{RB}** | **N_{RB}** | **N_{RB}** | **N_{RB}** | **N_{RB}** |
| 60 | 66 | 132 | 264 | N/A | N/A | N/A | N/A |
| 120 | 32 | 66 | 132 | 264 | N/A | N/A | N/A |
| 480¹ | N/A | N/A | N/A | 66 | 124 | 248 | N/A |
| 960¹ | N/A | N/A | N/A | 33 | 62 | 124 | 148 |
| Note 1: This SCS is optional in this release of the specification. | | | | | | | |

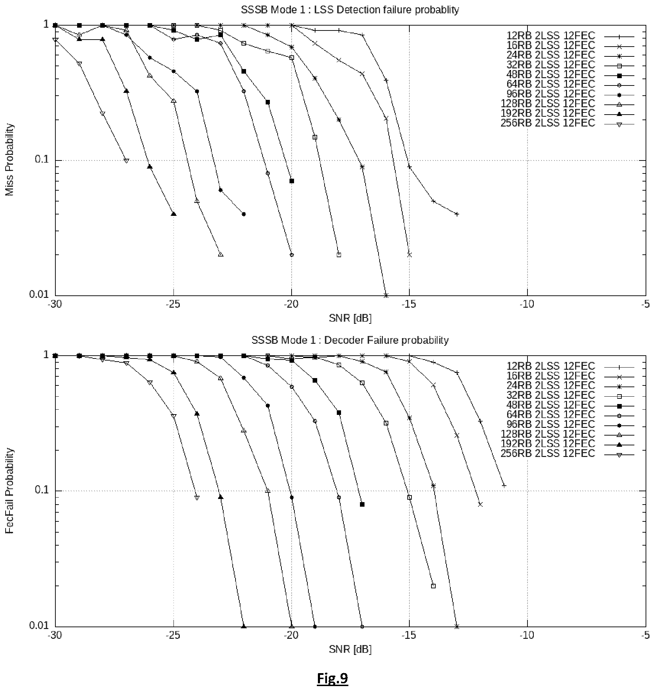

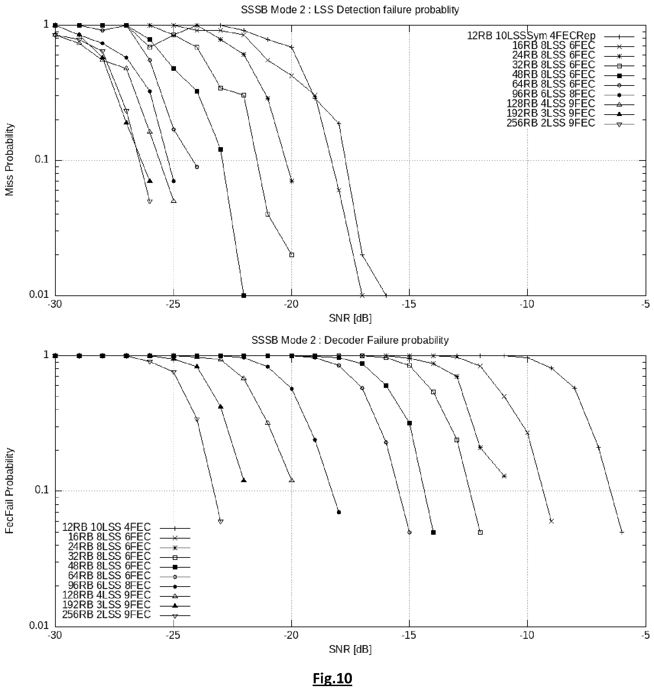

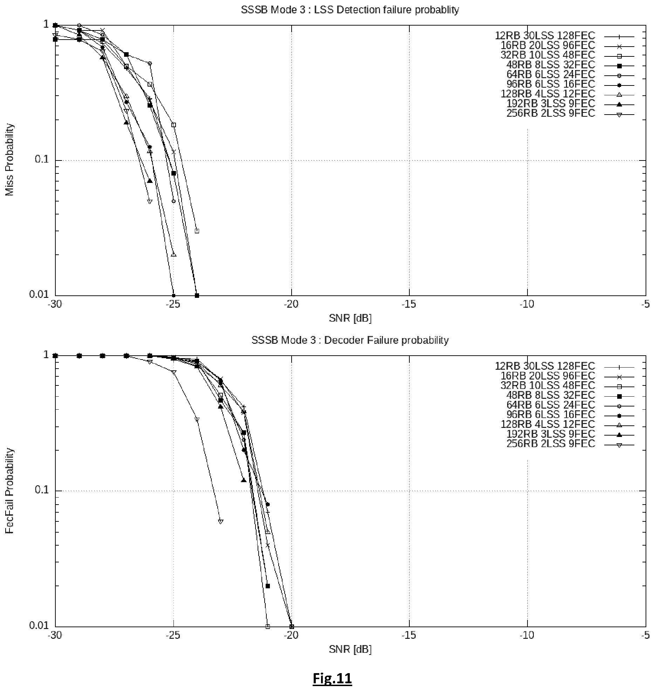

In order to comply with most 5G bandwidths a wide range of SSSB bandwidths can be defined. SSSB bandwidths of 12, 16, 24, 32, 48, 64, 96, 128, 192 and 256 RBs are considered and simulated below as they can maximize the bandwidth usage in most bands. For each of the possible bandwidth part bandwidths (12, 16, ..., 256 RBs), the number of LSS symbols (#LSSSym) is provided as well as the number of FEC symbols (#FEC Sym), the total number of symbols, the number of FEC repetitions, the resulting LSS detection threshold, the FEC threshold of a single codeword and finally the number of SPBCH transmissions required, such that the aggregate FEC QEF threshold after combining equals the LSS detection threshold. The SSSB design is a trade-off between more resources being assigned to LSS or to FEC symbols. When limiting the SSSB to a single slot for complexity reasons, there is a trade-off between detection and decoding threshold. The more symbols allocated to the LSS, the better the detection threshold, but the worse the decoding threshold as there are less possible repetitions for the FEC symbols. This trade-off can be illustrated by describing the following three modes:
- Mode 1: Balanced SSSB detection and SPBCH decoding performance in a single slot (i.e., 14 symbols) to limit complexity (See Table 4 and Fig.9);
- Mode 2: Optimized for SSSB detection down to -20dB SNR with SSSB in a single slot (i.e., **14** symbols); for the smaller bandwidths, more SPBCH sequences across different slots must be combined (See Table 5 and Fig.10);
- Mode 3: Optimal performance using SSSB sequences lasting more than one slot (i.e., more than **14** symbols) at the expense of higher complexity (Table 6 and Fig.11). Note that all bandwidth support < -20dB SNR operation

**Table 4 ; SSSB mode 1, optimal SSSB detection and SPBCH decoding with 14 symbols duration**

| # RB | #LSSSym | #FEC Sym | #Tot symbols | #FEC repetitions | LSS Detection threshold | Single slot SPBCH FEC threshold | Number of slots required to reach LSS threshold |
|---|---|---|---|---|---|---|---|
| 12 | 2 | 12 | 14 | 3.0 | -9.0 | -9.8 | 0.8 |
| 16 | 2 | 12 | 14 | 4.0 | -10.2 | -11.0 | 0.8 |
| 24 | 2 | 12 | 14 | 6.0 | -12.0 | -12.8 | 0.8 |
| 32 | 2 | 12 | 14 | 8.0 | -13.2 | -14.0 | 0.8 |
| 48 | 2 | 12 | 14 | 12.0 | -15.0 | -15.8 | 0.8 |
| 64 | 2 | 12 | 14 | 16.0 | -16.2 | -17.0 | 0.8 |
| 96 | 2 | 12 | 14 | 24.0 | -18.0 | -18.8 | 0.8 |
| 128 | 2 | 12 | 14 | 32.0 | -19.2 | -20.0 | 0.8 |
| 192 | 2 | 12 | 14 | 48.0 | -21.0 | -21.8 | 0.8 |
| 256 | 2 | 12 | 14 | 64.0 | -22.2 | -23.0 | 0.8 |

**Table 5 : SSSB Mode 2 : Optimized for SSSB Detection Performance Limited to 14 Symbols**

| # RB | #LSSSym | #FEC Symb | #Tot symbols | #FEC repetitions | LSS Detection threshold | Single slot SPBCH FEC threshold | Number of slots required to reach LSS threshold |
|---|---|---|---|---|---|---|---|
| 12 | 10 | 4 | 14 | 1.0 | -15.9 | -5.0 | 12.4 |
| 16 | 8 | 6 | 14 | 2.0 | -16.2 | -8.0 | 6.7 |
| 24 | 8 | 6 | 14 | 3.0 | -18.0 | -9.8 | 6.7 |
| 32 | 8 | 6 | 14 | 4.0 | -19.2 | -11.0 | 6.7 |
| 48 | 8 | 6 | 14 | 6.0 | -21.0 | -12.8 | 6.7 |
| 64 | 8 | 6 | 14 | 8.0 | -22.2 | -14.0 | 6.7 |
| 96 | 6 | 8 | 14 | 16.0 | -22.8 | -17.0 | 3.8 |
| 128 | 4 | 9 | 13 | 24.0 | -22.2 | -18.8 | 2.2 |
| 192 | 3 | 9 | 12 | 36.0 | -22.8 | -20.5 | 1.7 |
| 256 | 2 | 9 | 11 | 48.0 | -22.2 | -21.8 | 1.1 |

**Table 6 : SSSB Mode 3 Best SSSB Performance After Single Detection, Spanning More Than One Slot When Needed**

| # RB | #LSSSym | #FEC Symb | #Tot symbols | #FEC repetitions | LSS Detection threshold | Single slot SPBCH FEC threshold | Number of slots required to reach LSS threshold |
|---|---|---|---|---|---|---|---|
| 12 | 30 | 128 | 158 | 32.0 | -20.7 | -20.0 | 1.2 |
| 16 | 20 | 96 | 116 | 32.0 | -20.2 | -20.0 | 1.0 |
| 24 | 15 | 64 | 79 | 32.0 | -20.7 | -20.0 | 1.2 |
| 32 | 10 | 48 | 58 | 32.0 | -20.2 | -20.0 | 1.0 |
| 48 | 8 | 32 | 40 | 32.0 | -21.0 | -20.0 | 1.3 |
| 64 | 6 | 24 | 30 | 32.0 | -21.0 | -20.0 | 1.3 |
| 96 | 6 | 16 | 22 | 32.0 | -22.8 | -20.0 | 1.9 |
| 128 | 4 | 12 | 16 | 32.0 | -22.2 | -20.0 | 1.7 |
| 192 | 3 | 9 | 12 | 36.0 | -22.8 | -20.5 | 1.7 |
| 256 | 2 | 9 | 11 | 48.0 | -22.2 | -21.8 | 1.1 |

The SSSB LSS sequence and the scrambling sequences can be combined with TRANSEC features, changing the synchronization sequences and the LSS resources allocation based on a cryptographic module having a hop-ID and shared key as input.

The differences of the SSSB waveform according to the present invention have been described compared to the 5G NR SSB waveform. The SSS and PSS are replaced by the LSS. DMRS symbols are kept and the LSS symbols are split over the first and the last OFDM symbol. The energy of both DMRS and LSS is used to detect the SSSB. The FEC codewords are repeated to lower the QEF decoding threshold. The parameters for three SSSB modes have been presented. When the decoding threshold of the SPBCH in a single slot is too high, a number of SPBCH transmissions in different slots must be combined, which is possible when the payload remained unchanged (i.e. the system frame number did not change) to lower the decoding threshold.

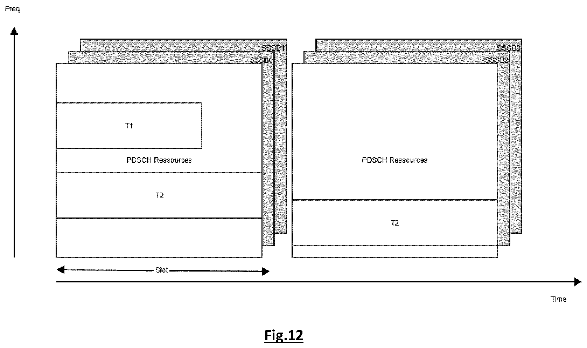

As mentioned above, multiple SSBs can be sent (e.g. to identify beams or MIMO channels) allowing a terminal to select the best one. This also holds for the SSSBs. The invention extends to any number of SSSBs sent. This is equivalent to the embodiment with multiple unicast SSSBs illustrated in Fig.12.

Some more SSSB embodiments with different FEC repetitions or longer and shorter LSS are now presented.

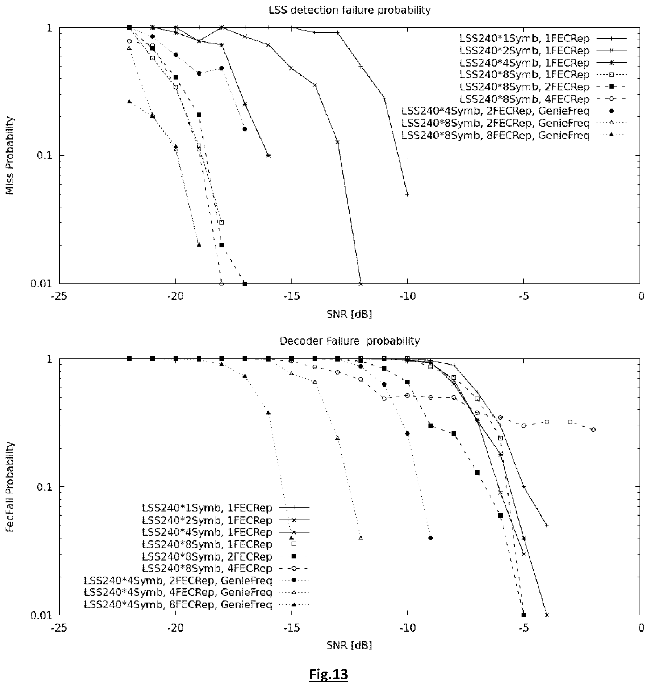

Fig.13 shows the detection (upper figure) and decoding (lower figure) performance result as a function of the number of LSS symbols and the number of FEC repetitions used. In this example the LSS symbols are concentrated in the first symbol of SSSB block followed by the payload SPBCH symbols. The standardized 5G encoding scheme for PBCH is reused. As expected for each doubling of the number of LSS symbols, the detection threshold improves by 3 dB (full lines in top subfigure) and, also as expected, the genie aided decoding performance improved by 3dB for each doubling of the FEC repetitions (dotted lines in bottom figure). The genie aided decoding performance is a theoretical limit and refers to the decoding performance assuming perfect time and frequency synchronisation (the synchronisation was achieved by a 'genie'). In a real receiver the synchronisation is always imperfect and depends on SNR and LSS+DMRS overhead. In a good design the total performance is close to the genie aided performance which is clearly not always the case in Fig.13.

The FEC performance improves by 3 dB for each doubling of the repetition for genie aided frequency tracking performance. In this genie aided test mode the frequency is not estimated but known in the receiver. Unfortunately, the 3dB improvement is not visible when real estimation is used (dashed lines). The performance flooring effect shown in Fig.13 comes from the poor frequency estimation causing high phase errors for symbols far from the LSS sequence. This poor tracking of the LSS block at the beginning of SSSB triggers a distributed resource allocation of the LSS symbols and the usage of DMRS symbols between the LSS symbols for improved detection. While distributing the LSS symbols improves the channel phase tracking, it does not impact the detection performance in terms of SNR but does increase the detection complexity, as more frequency hypotheses are required for good detection due to the longer time span of the LSS.

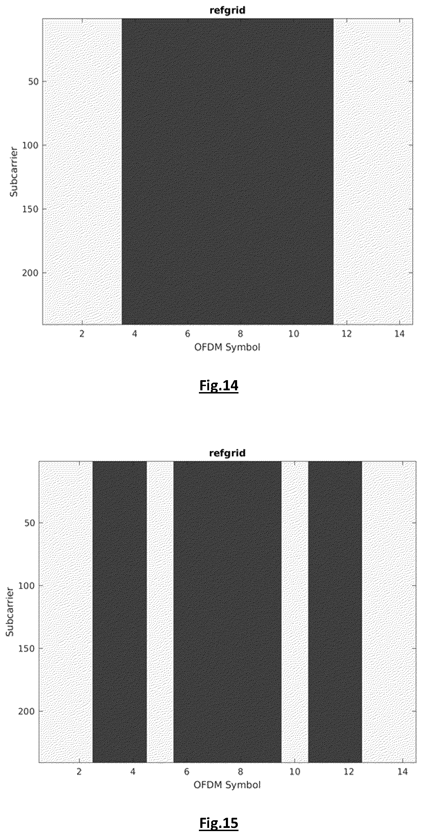

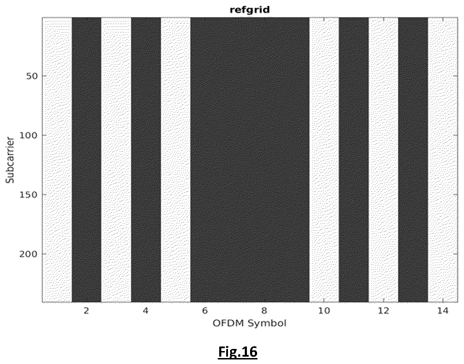

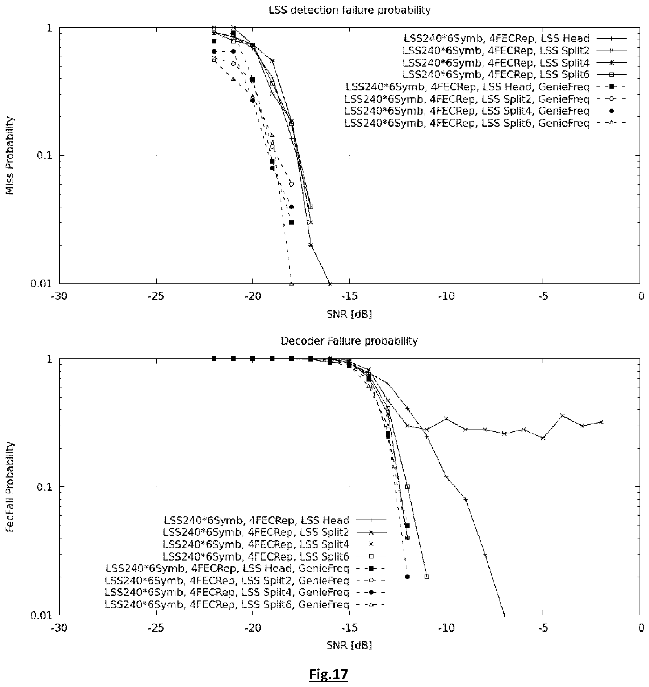

In one embodiment, the SSSB is optimized for the case where the SSSB can use a single slot (i.e., 14 symbols) and 20 RBs, like the standard 5G SSB. Three different LSS allocations are shown in Fig.14, Fig.15 and Fig.16 (LSS symbols are light in the figs) for a LSS split in 2,4 and 6 parts, respectively. Fig.17 shows the detection (upper figure) and decoding (lower figure) performance for the three different LSS split allocations. One can see that the detection QEF threshold is always around -16dB and a FEC performance flooring is observed when the LSS sequence is concentrated on the first symbols of the slot. The flooring is solved by splitting the LSS sequence in 4 to 6 segments. With one slot of 20 RBs, the QEF SNR threshold is around -12 dB, which is above the -20 dB SNR target. This can be useful in cases where consuming more than 20 RB is not acceptable. Therefore, the SSSB is extended to a wider and longer channel. These cases are further detailed below.

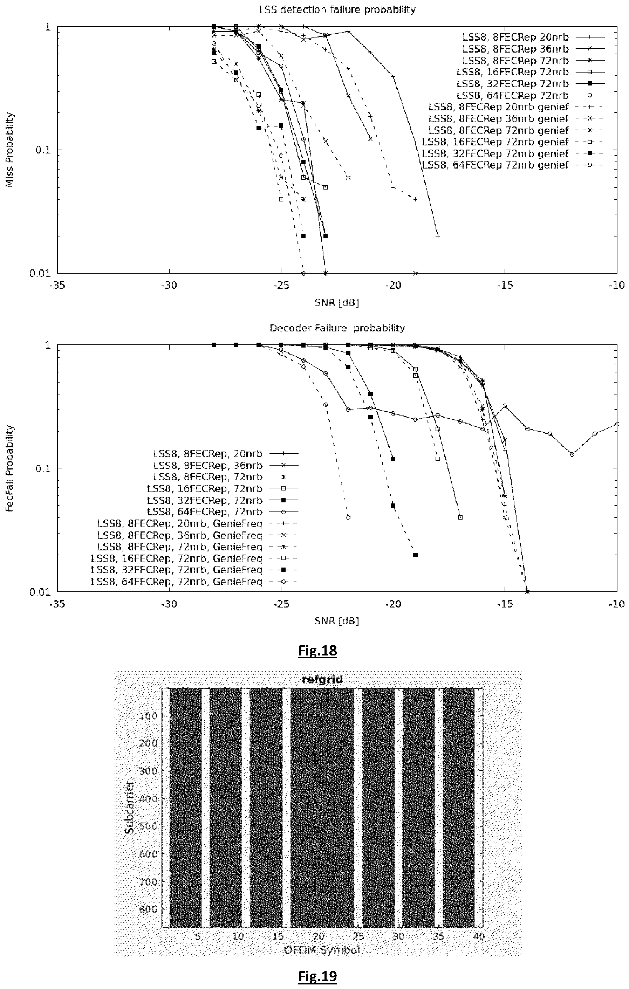

Instead of 20 RBs, the SSSB needs to occupy a multiple of 36 RBs, because 36 RBs allow hosting exactly one FEC repetition in one OFDM symbol making better use of the available resource elements. The results are presented in Fig.18. As expected, the SSSB detection performance keeps improving when increasing the LSS sequence length using more repetition or more RBs. The SPBCH FEC decoding performance improves with the number of FEC repetitions. Fig.18 shows the regular performance and a genie aided performance (that can only be used as test benchmark). When repeating FEC symbols 8, 16 and 32 times, the FEC performs close to the genie aided performance. Unfortunately, for 64 repetitions a flooring effect in FEC performance is again observed. This means the LLS distribution over 8 symbols as shown in Fig.19 is not enough for 64 repetitions. The problem with this high repetition of FEC words and distributed LSS sequences is that they can have an ambiguity in frequency estimation. It can be shown that there are frequency estimation failures that explain the FEC flooring effect. The flooring effect was first solved by randomly allocating the LSS symbols over the entire frame (hence, not in 8 equal chunks, but with a fully random allocation in time and frequency. This works well to avoid the performance floors. A better solution is to keep the DMRS symbol in the payload segment, which makes the solution more aligned with the selected solution for SPDCCH as described further in this disclosure.

The codes defining the LSS sequence, the SSSB DMRS sequence and the PBCH spreading code can be defined by PRBS sequences, other random sequences or by a shared cipher code. A fixed, small systematic spreading sequence is acceptable for jamming resilience, but not adequate for detection avoidance as all possible codes can be tried in an adversary receiver (brute force attack) or the code can be estimated (e.g. using blind estimation techniques). With a brute force or blind estimation (e.g., eigenvalues) attack, a correlation with a spread sequence can still be found. One can (but does not have to) obtain more robustness against a brute force or blind estimation technique. See for instance the papers *"*Obfuscating IEEE 802.15.4 communication using secret spreading codes" (B. Muntwyler et al., Proc. of the 9th Annual Conf. on Wireless On-demand Network Systems and Services, 2012) and *"*Physical layer built-in security analysis and enhancement of CDMA systems" (T. Li et al., Proc. of the IEEE Military Comm. Conf. (MilCom), 2005). Next to applying the right code generation, for example according to the above-mentioned literature, the codes should obviously be long enough. Also the DMRS sequence can be replaced by a different sequence (PRBS, random or determined by a cipher) in order to avoid adversary detection.

The codes defining the LSS and SBCH repetitions or spreading (spreading is a generalization of repetitions) can be (1) shared with all terminals in the network, (2) shared with only a part of the terminals forming a group of terminals or (3) even be unique to each terminal in the network (denoted *unicast* SSSB). In the latter case, the risk of disclosing information to an adversary terminal is lowest. Obviously more unicast keys require more SSSB transmissions. Hence, while achieving a more secure system with unicast SSSB channels, the SSSB overhead is obviously increased. As long as the number of overlapping SSSB sequences is limited, the SSSBs do not noticeably interfere with other channels. One embodiment where multiple SSSB channels are transmitted below the shared PDSCH was already shown in Fig.12.

The new SSSB and SPDCCH mode (as described further) allow very low SNR operation and allow overlaying the SPBCH and SPDCCH channels on top of the PDSCH channel. The SSSB can also be combined with the regular PDCCH channel. The SSSB does not depend on the SPDCCH and vice versa. The introduction of the SSB and/or the SPDCCH also has some control plane and system impact. First, the SSB block distribution modes (Modes A, B, to G, defined in ETSI TS 138 213) must be extended with new modes, known to the UE. These modes are defined in function of the frequency band and indicate the SSB and SSSB positions in frequency and time within a slot. The SSB periodicity is signalled as part of SIB1. To use the SSSB for initial acquisition, a new mode is defined with a SSSB block offset of 0 RBs, starting at symbol 0 and a fixed SSSB periodicity of for example 10 ms. The SSSB periodicity can also be signalled in SIB, but in order to allow combining different SPBCH FEC symbols across slots the periodicity is assumed fixed for SSSB modes.

Similar to the SSSB, it is also proposed to transmit the PDCCH with lower PSD than the PDSCH while allocating more REs for the PDCCH with lower PSD than for the regular PDCCH. The new channel is denoted SPDCCH. The proposed SSSB and SPDCCH allow hiding those channels, making the spectrum usage more uniform and rendering it difficult for an adversary to see any hint in the spectrum. Compared to the SSSB waveform design, the SPDCCH detection is less complicated as detection and time synchronization with the OFDM grid is already achieved during the SSSB detection. Hence, for the SPDCCH, only channel estimation, equalization and decoding needs to be considered. In what follows, first the standardized PDCCH is explained and analyzed. Next, the modifications required to achieve - 20 dB SNR operation are detailed and finally some performance simulations are reported.

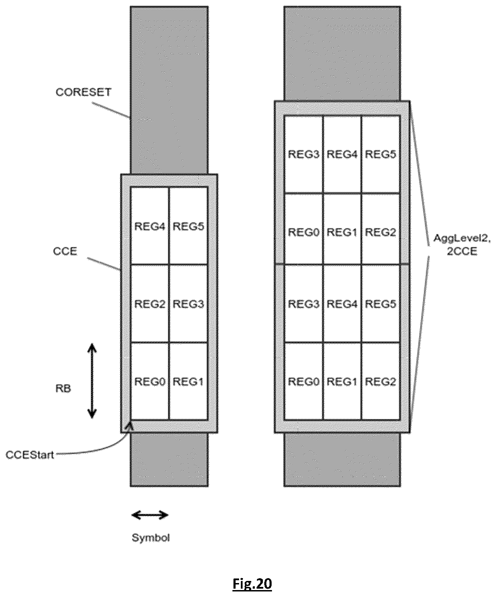

The standard reserves dedicated resources in the time and frequency grid for PDCCH transmissions. These reserved resources are called coresets (control resource sets). The PDCCH transmissions are orthogonal to other transmission in the sense that they do not overlap in time and frequency with other signals. The reserved coreset resources can be allocated across 1, 2 or 3 symbols in time and across several resource blocks (RBs) in frequency. The frequency span of a CORESET does not have to consume the whole bandwidth part and the allocated RB resources can be discontinuous. Within a coreset, the resources allocated to a PDCCH transmission are expressed in control channel elements (CCEs). Each CCE is composed of 6 resource element groups (REGs). A REG is a single symbol in time and 12 subcarriers. The PDCCH transmissions can consume 1, 2, 4, 8 or 16 CCEs. The number of CCEs used per PDCCH transmission is called the aggregation level. Fig.20 illustrates two examples: first a PDCCH consuming 1 CCE and a CORESET of two symbols, and second, a PDCCH transmission consuming 2 CCEs on a coreset of 3 symbols.

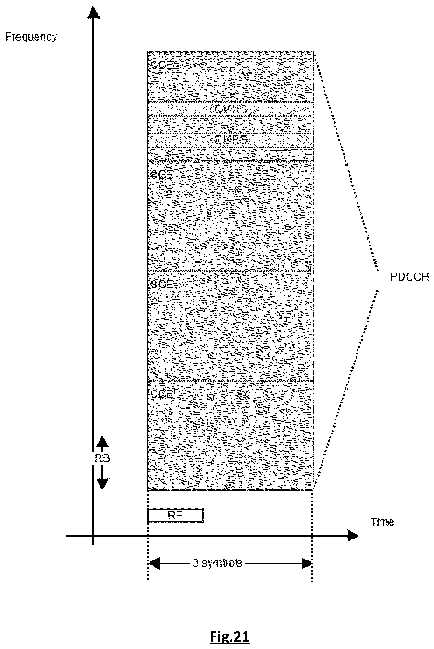

The number of CCEs per PDCCH can be selected individually for each UE by the gNB and depends on the required SNR level and the number of payload bits. The PDCCH transmissions contains the downlink control information (DCI). The DCI can be composed of downlink scheduling assignments, uplink scheduling grants or other downlink control messages (like slot format indication or uplink power control commands). Several formats are defined for downlink allocation, for uplink grants and for other signalling messages. The DCI payload size depends on the control information and ranges from 12 bit to 140 bits. The payload is rate matched over the available resources defining the exact code rate. Obviously, the SNR performance depends on the number of CCEs used and the payload size. Typical DCI FEC performances are shown in Fig.20. A typical DRMS allocation over a three symbols PDCCH is shown in Fig.21. Each CCE is composed of 72 Resource elements (12 carriers per RB * 6 REGs per CCE). Of these 72 REs, one fourth (= 18) is consumed for DMRS while 54 REs are used for payload symbols. The DMRS overhead is used for channel estimation and equalization.

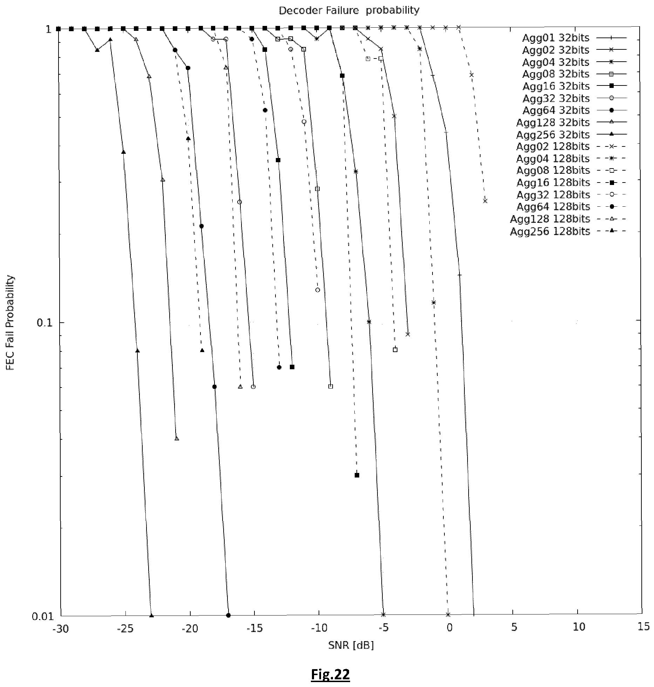

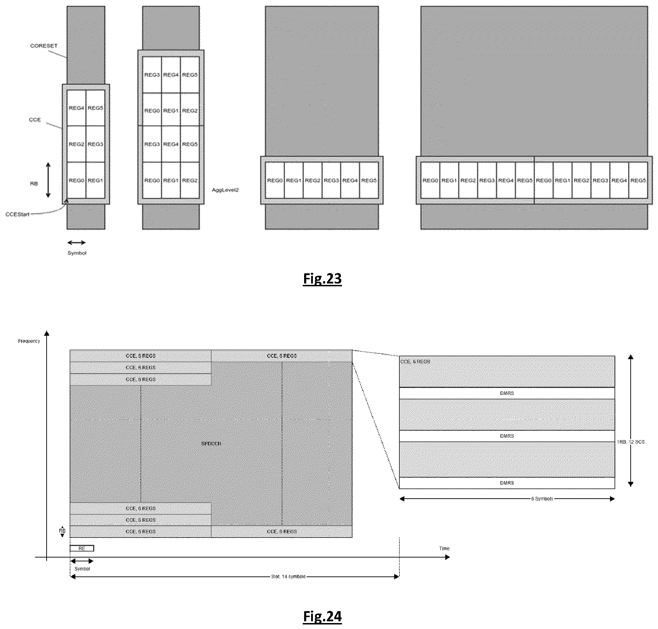

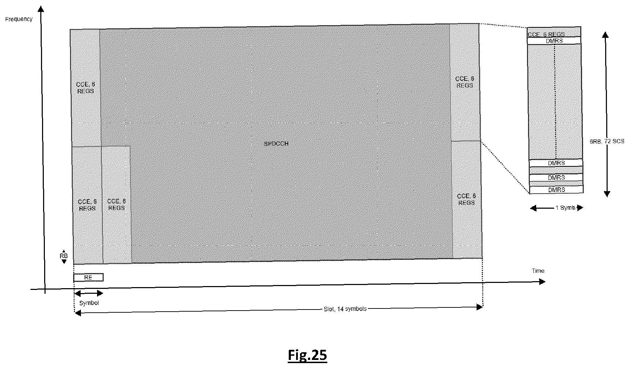

Similarly to the SSSB, the new SPDCCH channel is sent with lower PSD than PDSCH transmissions. In order to minimize the changes to keep backward compatibility, the concept of CCE and aggregation levels is kept for the SPDCCH, but the maximum aggregation level is extended in the present invention. In order to cope with lower SNR conditions, the aggregation level range is extended from maximum 16 to maximum 256 CCEs. The FEC performance for these higher aggregation levels in function of payload sizes are also shown in Fig.22 (all aggregation levels greater than 16 are new compared to 3GPP standard). To limit the number of RBs used, the maximum SPDCCH symbol duration is extended to 12 symbols. The rationale for 12 symbols is that exactly two CCEs can be fit into one RB. Going above 14 symbols is possible. However, this would be beyond the slot boundary complicating the scheduler that operates per slot. DCI resource allocations over 2, 3, 6 and 12 symbols PDCCH block transmissions are shown in Fig.23. An embodiment of 12 symbol SPDCCH with aggregation level 32 is shown in Fig.24. This figure shows the SPDCCH composed of CCE blocks and the DRMS overhead in each CCE BLOCK. In this example the DMRS overhead is 1/4. The overhead typically remains constant over the whole SNR range. The lower the SNR, the more the aggregation level needs to increase for successful decoding, the higher the bandwidth spreading and the higher the number of DMRS symbols available for channel estimation. The DMRS overhead in the SPDCCH waveform is similar to the SSSB. The main difference is the absence of an LSS sequence in the SPDCCH. In the SSSB the LSS sequence is required for detection and time and frequency alignment of the waveform. For the PDCCH or SPDCCH this is not required as the transmissions are aligned to the OFDM grid. The receiver is already aligned to the grid by tracking the SSB or SSSB blocks and no coarse time or frequency error detection is required. An embodiment consuming 14 symbols or more is also possible. For 14 symbols, the CCE organization must be reviewed. In one embodiment, the CCE blocks can be spread in frequency first and then in time. So instead of mapping CCEs to 1 RB * 6 symbols as in Fig.24, one can have CCE consuming 6 RB * 1 symbol. This allows fitting 14 CCEs in 6 RBs per slot as shown in Fig.25.

Similarly to the SPBCH, the FEC performance improvements are obtained by repeating FEC symbols. The concept is readily available in 5G, hidden behind the aggregation level and rate matching concept. The polar codes and 24 bits CRC defined in 3GPP are kept. Only the code repetition range is extended in for the SPDCCH according to the invention compared to the standard PDCCH. The payload size ranges from 12 to 140 bit and the encoded block size 512 bits. After encoding, the 512 bits are rate matched to the available resources (108 bits per CCE or 54 QPSK symbols per CCE) in the allocated number of CCEs. First, the FEC only performance is assessed assuming the aggregation level can be extended where needed. Fig.22 shows the FEC performance in function of the aggregation level and the payload size (32 or 128 bits). One can see that the 5G aggregation level of 16 CCE allows operation down to -10dB for 32 bits payload. Aggregation up to 128 or 256 CCE allows operation down to below -20 dB SNR.

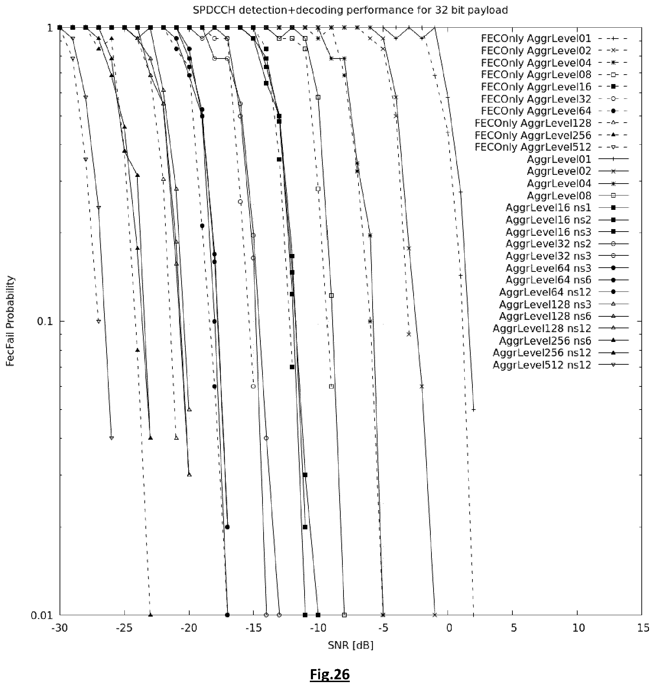

Now the full SPDCCH detection, equalization and decoding is considered. This includes channel estimation based on the available DMRS symbols. Fig.26 shows the achieved performance with genie aided frequency estimation (dashed lines) and with real receiver estimations for several number of symbols (full lines). One can see that the real receiver performance is close to the genie aided performance. For VLSNR equalization the DMRS estimation averaging is increased. This limits the equalization performance but avoids equalizer self-noise. One can see that with the higher aggregation level SPDCCH reception is possible with an SNR down to less than -20 dB. All presented performance results are agnostic of the numerology. For higher numerology the frequency is more spread, but the sequence duration is shorter, and the SNR performance is identical.

In an example embodiment and to comply with as many bandwidths as possible, a range of RB bandwidths for the SPDCCH is proposed (see Table 7). The SPDCCHs are always spanning 12 symbols, spreading as much as possible over the slot. RB sizes below 48 RB do not cope with -20 dB target but are anyway not recommended due to the limited spreading options and consequently the limited jamming resilience.

**Table 7 : supported SPDCCH variants with number of RB, aggregation level and expected SNR performance**

| # RB | NFEC Aggregation level | Expected SNR Threshold [dB] |
|---|---|---|
| 12 | 24 | -14.5 |
| 16 | 32 | -15.7 |
| 24 | 48 | -17.5 |
| 32 | 64 | -18.7 |
| 48 | 96 | -20.5 |
| 64 | 128 | -21.7 |
| 96 | 192 | -23.5 |
| 128 | 256 | -24.7 |
| 192 | 384 | -26.5 |
| 256 | 512 | -27.7 |

In a further embodiment and in the case of using unicast SSSB (i.e., a unique SSSB per terminal or per group of terminals), the DCI info can be included in the unicast SSSB removing the need for another control channel such as the SPDCCH. Only SSSB then signals resource allocation for PDSCH and PUSCH. This solution however has more control plane and system impact.

When using SPDCCH for the control channel, the concept of coresets can be ignored (e.g., coresets are not reserved for control channel resources) as no reserved resources are required. The search space is useful to limit the UE complexity by limiting the SPDCCH search occasions. The search spaces can also be fixed and known to the UE to avoid any signalling impact. For the SPDCCH channel a search space is defined with one candidate position starting as RB 0 and symbol 0 in each slot. The aggregation level is fixed.

The new SSSB and SPDCCH channels can have a very low PSD (and thus do not noticeably disturb other transmissions using the same REs) and the PDSCH transmissions can thus use all REs, so removing all spectral hints about the position of the SSB or the downlink control channel to adversary receivers. As an extra advantage of removing the reserved resources for SSSB and SPDCCH in the OFDM grid is that it makes the PDSCH resource allocations more regular over consecutive slots. A more regular allocation results in smaller jitter and more constant FEC rates. Indeed, the periodic insertion of legacy PBCH slots results in a different number of available REs for traffic between consecutive slots. As a consequence, the effective FEC overhead changes from slot to slot. Changing FEC rate from slot to slot makes tight control of the ACM algorithm (like typically done over a satellite link) more difficult. Both secure and regular SSB and PDCCH signals can be combined keeping the solution according to the invention compatible with regular 5G-NR.

5G-NR has the RNTI concept that allows a terminal to identify which DCI packet in the PDCCH or SPDCCH is intended for itself. The RNTI is implicitly encoded in the CRC scrambling check of the DCI packets. This cannot be used as a security measure. The regular UE does not use wrong CRC packets and does not need to differentiate wrong packets from packets for other UE's. However, an adversary receiver can decide to process and decode DCI with all possible RNTI codes, learn the link RNTI and get information about the network activity to the different UEs. The SPDCCH can avoid this security risk of the RNTI scrambled CRC check by keeping the SPDCCH DMRS sequence secret limiting the synchronization and detection possibilities by adversary receivers. Similarly to the SSSB the secret DMRS sequence for SPDCCH can change over time and be defined by cipher codes. The need to hide the SSSB and SPDCCH may even "require" transmitting another signal with higher PSD on the same resource elements (REs) as those used by the SSSB and SPDCCH. So, in case there is not sufficient traffic, the scheduler may not schedule sufficient REs for the PDSCH. To solve this, the remaining REs can be filled with dummy traffic. Alternatively, noise can be added on those REs.

The PUCCH channel is an uplink channel carrying UCI information. The UCI included HARQ messages or signal quality estimations. The UCI packets can be transferred over the PUCCH channel or over the PUSCH channel when PUSCH grants are available. Similarly to SPDCCH, a secure PUCCH (SPUCCH) can be defined. The PUCCH is an uplink signal that can be hidden below the PUSCH. The goals are similar, keeping the SPUCCH hard to see or detect by adversary and more robust to jamming. The 5G PUCCH can have even lower payload sizes down to 2 bits. The PUCCH is not always using polar codes for the shortest packets. When limiting the PUCCH payload to more than 12 bits per packet, the SPDCCH extensions can also be applied to SPUCCH resulting in exactly the same FEC performance and detection figures. Alternatively, the PUCCH weaknesses can be mitigated by banning PUCCH transmission completely on the network. This can be achieved by guaranteeing a minimum uplink grant to each UE. As the PUSCH always has grants, all UCI messages can be transmitted over the PUSCH channel.

Next to SPBCH, SPDCCH and SPUCCH, the invention can be extended to the secure PRACH (SPRACH)s. Instead of reserving RO resources for PRACH which can easily be detected or jammed, the PRACH waveform can be transmitted overlapping with PUSCH resources with a lower power density. Similarly to SPBCH and SPDCCH this will make the SPRACH waveform difficult to detect by adversary terminals.

In the forward link, the power balance between the PDSCH and SPBCH/SPDCCH can be balanced perfectly (as the gNB is the source of all the channel) guaranteeing secure channels to be properly hidden. In the return link, the SPRACH and SPUCCH can be hidden below the PUSCH traffic, but this come with an extra channel as the power between the secure channels and the PUSCH is difficult to balance as the different transmission might originate from different terminals. The link budget of the different terminals can be very different making it difficult to guarantee that the SPRACH or SPUCCH are transmitted with the right power density to be well hidden below PUSCH to adversary receivers, but still decodable by the Hub. The uplink resource elements can even be unallocated(unused) when a terminals transmits a SPUCCH or SPRACH waveform making these waveform visible to unintended receivers. The solution to all these power balance problems is advanced resource allocation mechanism and power control loops that guarantee that the SPRACH waveform transmitted below other PUSCH traffic or below the system noise.

Because of the known overhead penalty, alternatives to CP-OFDM have been proposed as candidate waveform for 5G-NR, e.g. Filter Bank MultiCarrier (FBMC), which is also a multicarrier waveform combining shaped subcarrier modulation with O-QAM modulation. This results in more frequency contained waveforms than OFDM limiting the ICI and out-of-band interference. The shaped modulation allows operation without CP improving the efficiency. The reasons why FBMC was not retained in 3GPP relate to the extra complexity and the more limited flexibility of MIMO channels, see the paper *"*FBMC vs OFDM Waveform Contenders for 5G Wireless Communication System" (Kansal, P. et al., Wireless Engineering and Technology, 8, 59-70, 2017).

Furthermore, more frequency contained waveforms are less time contained and are more difficult to use in TDD or TDMA schemes due to the time overlaps. The spread in time of the symbol introduces extra jitter. Other multicarrier waveform alternatives have been proposed. An optimal multicarrier waveform should have a waveform that is contained in time and frequency, so avoiding ISI and ICI on distant symbols and subcarriers, should have a maximum power spectral density allowing an efficiency maximization and should have orthogonal symbols for easier detection. Table 2.1 in *"*FBMC-OQAM transceivers for wireless and optical fiber communications," (F. Rottenberg, Ph.D. thesis, March 2018) summarizes several multicarrier technologies. Only plain OFDM offers the maximal density in time and frequency grid combined with orthogonality. Finally, lower time spreading can be achieved with OFDM via filtered CP instead of shaping over multiple symbols.

To change as little as possible to 5G-NR when dropping the CP, it is proposed to keep the 5G-NR slot alignment. Thus, the efficiency gain is only achieved when being able to include more than 14 symbols in a slot. The standard already allows two flavours of Cyclic Prefix lengths, namely the regular CP and the extended CP in numerology 2. The regular prefix maps 14 CP-OFDM symbols in a slot (of 1 ms in numerology 0). The extended prefix maps only 12 CP-OFDM symbols in a slot. Instead of a slot containing 14 symbols with the normal cyclic prefix, it is here proposed to remove the cyclic prefix to allow fitting exactly 15 symbols in a slot. A subcarrier spacing of 15kHz results in an OFDM symbol duration without CP of 1/15000 sec or 1/15 ms or 1/15 of a 1 ms slot. The regular CP features 14 symbol per slot. The extended CP features 12 symbol per slot and the new CP free mode allows 15 symbols per slot improving the efficiency by a factor 15/14 or 6.6 %. An intermediate version with a shorter CP does not achieve the simplicity requirement as 15 symbols do not fit in a slot. The different CP options are not compatible with each other in the same slot as the symbols are misaligned. However, by keeping the 5G-N slot alignment, multiple numerologies can still be supported.

In 5G-NR NTN networks, the residual delay uncertainties (after UE and Satellite Doppler effects pre-compensation) do not always allow removing the CP to gain efficiency and avoid the easier detection of the symbol timing. Without CP, all time misalignments between the terminals and the hub cause loss of orthogonality between the several transmissions from terminals and hub. The high delay uncertainty can be pre-compensated using orbit information and UE position data (as proposed in 3GPP R17). However, this does not work for instance in the absence of GNSS information at the UE (e.g. due to issues with the GNSS signal, for cost or power reasons, or because the GNSS signal is jammed by the adversary). As an alternative, it is proposed to use closed loop time and frequency tracking, as explained in *"*5G-NR GNSS independent time and frequency synchronization in NTN scenarios" (P. Delbeke et al., Ka conference, October 2023). This terminal closed loop time correction requires some extra control overhead but allows reducing the terminal misalignment to very low uncertainties. The absence of multi-path on a satellite channel and the closed loop time error control allows having very limited symbol misalignment between adjacent transmission and should allow removing the CP completely yielding a direct efficiency gain.

Some timing error estimators make use of the CP for synchronization. Instead, DMRS known symbol information can be used for synchronization and symbol timing error detection. As a baseline all time and frequency error estimates can be based on maximum likelihood detectors of DMRS signals without using the CP information.

Instead of an extended slot definition of 15 symbols, the security leak is in another embodiment only addressed when including the standardized CP duration. The content in the CP is then replaced with randomized content. The randomized CP avoids the CP usage by an eavesdropper but also removes the advantage of being insensitive to small time misalignments in the receiver. As discussed above, this can be overcome with closed loop time tracking on non-multipath satellite channels guaranteeing better time alignment. This embodiment keeps the 14 symbols per slot, requires less changes to 5G-NR and offers better backwards compatibility with existing legacy TN networks. Although the solution does not allow time misalignment, the randomized CP segment can be exploited for windowing resulting in an improved frequency mask limiting out of band transmissions. This is known as windowed CP-OFDM.

The 5G PRACH channel uses reserved resources in the uplink OFDM grid. With the growing time and frequency uncertainty need caused by satellite networks compared to terrestrial networks channel, the size of the RO (and the number of reserved REs) grows, making the existing PRACH mechanism inefficient for satellite links. Moreover, the RO can easily be identified by adversary and consequently be jammed or spoofed. In 5G-NR, the link delay is estimated based on a comparison of the RACH reception time of the sequence with the start of the allocated slot. There exist unslotted logon waveforms in the art, see for instance US11456801. In US2022/407589, this was extended for 5G-NR. In US2022/407589, the link delay is estimated by comparing the RACH reception time with the transmission timestamp transferred as part of the payload of the logon waveform. Furthermore, in US2022/407589, the RACH resources are reorganized such that these consume one or more resource blocks in frequency for, in a preferred embodiment, an infinitely extended time window (or, in another embodiment, at least for a time window that is long compared to a 5G-NR subframe). The reserved RACH resources can be placed anywhere in the return bandwidth. On terrestrial links, spreading the logon waveform more in frequency than in time was beneficial as it minimizes delay and improves the resilience to multipath. However, for NTN satellite links the delay is less critical as the round-trip times are larger and there is typically less multipath fading. Current 5G-NR standards (e.g. 3GPP release 16-17) do not include any payload information in the RACH waveform. Therefore, a person knowledgeable of the field of wireless communication standards, will readily realize that implementing the solution presented in US2022/407589 requires, depending on the embodiment, a combination of some extensions to the current 5G-NR standard. US2022/407589 then proposed a new PRACH waveform comprising a Zadoff-Chu sequence and a logon payload. In an embodiment, the logon payload is encoded using polar codes as standardized in 5G-NR, e.g. the polar codes from the PUCCH channel.

5G-NR logon channel security can be improved with the following modifications to avoid terminal identification and determination of terminal position by an adversary user :
- Randomize the PRACH transmission time and transmission frequency offsets, making sure no position information can be derived from detected delay or frequency offsets of the PRACH waveform
- Randomized or use a unique logon sequence, not disclosing any identification info of the UE (this is already the case for the PRACH waveform in the four steps logon)
- Use newly defined Secure PDCCH for PDSCH allocation and PUSCH grant signalling
- Use wideband secure PRACH waveform with lower power spectral density below the PUSCH
This is described more in detail below. More specifically, it is described how the system can still log-on a terminal with the above mitigations, which is not straightforward.

With the randomized PRACH transmission in time and frequency, the gNB can no longer estimate the time and/or frequency offset of the terminal on the PRACH waveform. However, the gNB can estimate the reception time and frequency offset and send those back to the UE via the Random Access Response (RAR) message. This message can potentially be intercepted by an adversary but does not allow identifying the UE or derive position of terminal as an adversary has no access to the applied time and frequency offsets by the UE. The terminal can receive this reception timestamp and compare it to the transmission timestamp allowing to compute the link delay. Only the terminal can compare the transmission and reception timestamp and no one else needs to know this information (not even the hub). When the hub needs the terminal position for other goals (like e.g. beam handover or ACM algorithms) this can be sent via a secure channel after the initial connection has been setup. Only one of both, time or frequency, can be randomized, but both do give some information about the link delay or delay changes. So, for optimal security, in a preferred embodiment, both transmission time and transmission frequency offset should be randomized. Unsolicited logon as described in US2022/407589 is a risk for unwanted terminals trying to enter the network. These can use randomized sequences and get allocated capacity to logon. Normally those then fail to authenticate themselves, but they could try to use the ID of another known, compromised terminal. For higher security, this can be solved by allowing only solicited terminal logons with known sequences per terminal.

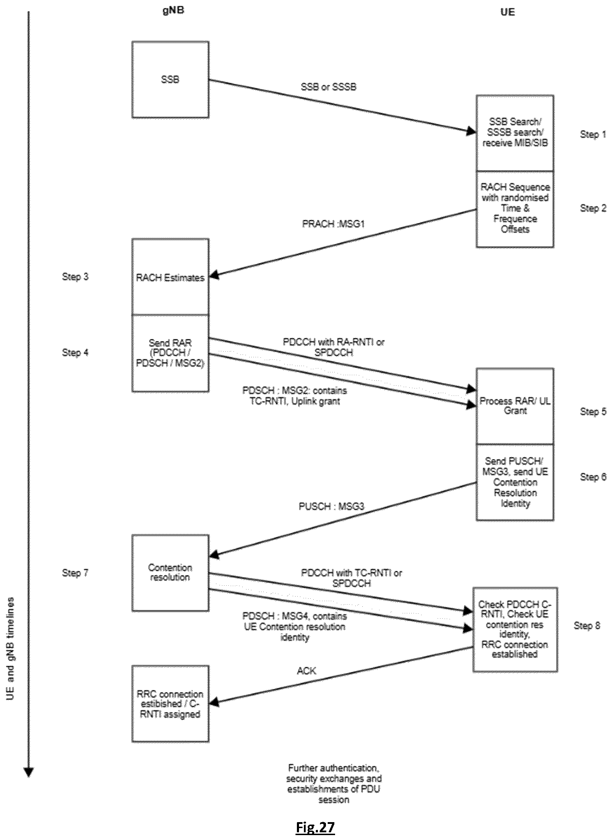

The following steps detail an improved logon procedure, alleviating the adversary eavesdropping risk. It combines a new logon waveform and response formats with the secure SPDCCH channel proposed above. Fig.27 details an exemplary 5G-NR logon flow according to the invention, with indication of the extra security options.
Step 1 : the gNB sends to the UE the SSB or SSSB
   - The UE performs forward acquisition on the network
   - The UE receives MIB and SIB information on PBCH or SPBCH
   - In both cases one extracts from MIB and SIBs the RACH procedures and sequences to be used as well as the control channel signalling, like an indication of the control channel coresets and search spaces and an indication whether extra secure SPDCCH channels should be used
   - In an embodiment where terminals are only allowed to log in in a solicited way with known sequences per terminal, it is needed to signal the sequences the terminal should use, (e.g. the Zadoff Chu sequence or another sequence, like a spread spectrum sequence) from the gNB to the terminal, e.g. through MIB/SIB signalling (ideally through the secure SSB and PDCCH methods described above)
Step 2 : the UE sends to the gNB : PRACH sequence (MSG1)
   - The terminal sends the RACH sequence with randomized time and frequency offsets, according to the invention. The RACH sequence is either randomly selected from a known set according to 5G-NR or is the signalled sequence when only allowing solicited logon.
   - The UE stores the transmission time stamp and transmission frequency offset (and so does not convey it in the PRACH payload like proposed in US2022/407589. This randomization of time and frequency offsets is new compared to the 5G-NR procedure and compared to US2022/407589.
   - The UE starts monitoring RA-RNTI scrambled PDCCH messages or starts monitoring of the SPDCCH channel
Step3 : the gNB detects the PRACH waveform and estimates arrival time and frequency offset
Step4 : the gNB sends to the UE the RAR message (MSG2)
   - The gNB sends control channel PDSCH allocation for RAR transmission via PDCCH information with RA-RNTI or via the SPDCCH channel
   - The gNB sends the RAR (Random Access response) message on PDSCH. RAR contains an uplink grant allocation on PUSCH. In the regular standardized 5G-NR, it would also contain a timing advance correction. According to an embodiment of this invention, in extra secure mode, it contains instead of the timing advance correction the estimated reception time stamps, and the estimated Frequency offset (In 5G-NR, up till now, no frequency correction is sent back). The RAR message is transmitted over the PDSCH channel. The regular PDCCH can be received by an eavesdropper and the RAR can be received. When SPDCCH is used, it will be missed by the eavesdropper and the RAR is hard to find by an eavesdropper. In case RAR message can be eavesdropped, at least time and frequency information do not disclose position information about terminal trying to login.
Step 5 : The UE detects the PDSCH allocation via PDCCH or SPDCCH. The UE receives the RAR and does the following:
   - The UE computes its Time and Frequency misalignment compared to the hub and the OFDM grid
   - The UE Receives an Uplink grant for its PUSCH channel.
   - The UE can complete its logon in the PUSCH channel in case of a solicited logon (which is typically contention free) or, e.g., for cell handovers. If contention is present (e.g., due to an attack) the MSG3/MSG4 are required to avoid collisions of logon requests
In case of a solicited logon, the login cycle is completed here. Steps 6, 7 and 8 are optional for contention-based logon (e.g. for an unsolicited logon).
Step 6: the UE sends MSG3 to the gNB. The UE transmits in uplink grant PUSCH channel with correct time offset and frequency offset based on the computed Time and Frequency misalignment in step 4. MSG3 contains UE Contention Resolution Identity. UE starts monitoring TC-RNTI PDCCH channel or SPDCCH channel.
Step 7: the gNB sends MSG4 to UE. The UE receives control allocation via PDCCH or SPDCCH. MSG4 serves for contention resolution and terminal ID verification just like in the regular 5G-NR logon procedure. The terminal comes in the connected mode.
Step 8: the UE sends ACK to the gNB. The UE sends ACK. The UE is then registered and officially in the connected mode.
The physical layer network connection is now complete. In higher layers, further SIM authentication, security exchanges and PDU session setups will be performed.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of communication in a wireless communication system comprising a gateway and one or more terminals, comprising:
- scheduling a first plurality of resource elements for downlink transmission towards said one or more terminals of payload data in a first physical channel with a given first power spectral density,
- scheduling a second plurality of resource elements for downlink transmission of broadcast information and/or control information related to said downlink transmission of said payload data in said first physical channel, in at least a second physical channel with a power spectral density lower than said given first power spectral density, at least a subset of said second plurality of resource elements being comprised in said first plurality of resource elements,
- downlink transmitting said payload data in said first physical channel and said broadcast information and/or control information in said second physical channel,
- demodulating and decoding in at least one terminal of said one or more terminals broadcast information and/or a subset of said control information in said second physical channel,
- demodulating and decoding in said at least one terminal at least a subset of said payload data in said first physical channel based on said demodulated and decoded broadcast information and/or subset of said control information.

2. The method of communication as in claim 1, where said first physical channel is a Physical Downlink Shared Channel and said second physical channel is a Physical Downlink Control Channel transmitting at said lower power spectral density and compatible with a 5G-NR waveform.

3. The method of communication as in claim 1, where said first physical channel is a Physical Downlink Shared Channel and said second physical channel is a Physical Broadcast Channel transmitting at said lower power spectral density and compatible with a 5G-NR waveform.

4. The method of communication as in any of claims 1 to 3, whereby in said second physical channel a secure synchronization signal block is transmitted comprising a long synchronization signal, LSS, and a secure payload segment being a secure Physical Broadcast Channel, said secure payload segment comprising additional coded bits.

5. The method of communication as in claim 4, where said secure payload segment in said second physical channel comprises downlink control information.

6. The method of wireless communication as in claims 4 or 5, wherein said secure synchronization signal block occupies one slot of 14 symbols.

7. The method of wireless communication as in claims 4 or 5, wherein said secure synchronization signal block occupies more than one slot of **14** symbols.

8. The method of wireless communication as in any of claims 2 to 7, wherein said secure synchronization signal block and/or said Physical Downlink Control Channel occupies a number of resource blocks equal to the number of resource blocks in the transmission bandwidth.

9. The method of wireless communication as in any of claims 4 to 8, wherein more than one secure synchronization signal block is transmitted, each having a different LSS.

10. The method of wireless communication as in any of the previous claims, wherein said downlink transmitting is performed using one or more beams from a transmission point apparatus, and wherein a signal transmitted on each beam of said one or more beams comprises a secure synchronization signal block, each secure synchronization signal block having a different LSS.

11. The method of wireless communication as in any of claims 4 to 10, wherein at least one of said terminals receives a standardized synchronization signal block or a standardized physical downlink control channel and at least one other terminal receives said secure synchronization signal block or said secure physical downlink control channel.

12. A method of communication in a wireless communication system comprising a gateway and one or more terminals, comprising:
- scheduling a first plurality of resource elements for uplink transmission from said one or more terminals towards said gateway of payload data in a first physical channel with a given first power spectral density,
- scheduling a second plurality of resource elements for uplink transmission in at least a second physical channel logon and/or a subset of uplink control information with a power spectral density lower than said given first power spectral density, at least a subset of said second plurality of resource elements being comprised in said first plurality of resource elements,
- signalling said first and second plurality of resource elements from said gateway to said one or more terminals,
- uplink transmitting in one or more of said terminals-said payload data in said first physical channel based on said signalled first plurality of resource elements,
- uplink transmitting said logon and/or a subset of uplink control information in at least said second physical channel with a power spectral density lower than said given first power spectral density based on said signalled second plurality of resource elements,
- demodulating and decoding said payload data in said first physical channel using said first plurality of resource elements,
- demodulating and decoding said logon and/or a subset of uplink control information in said second physical channel using said second plurality of resource elements, said logon and/or a subset of uplink control information being at least partially hidden by said first physical channel.

13. The method of communication as in claim 12, where said first physical channel is a Physical Uplink Shared Channel and said second physical channel is a Physical Uplink Control Channel transmitting at said lower power spectral density and compatible with a 5G-NR waveform.

14. The method of communication as in claim 12, where said first physical channel is a Physical Uplink Shared Channel and said second physical channel is a Physical Random Access Channel transmitting at said lower power spectral density and compatible with a 5G-NR waveform.

15. The method of communication as in claim 13 or 14, wherein at least one of said terminals transmits a standardized Physical Random Access Channel or a standardized Physical Uplink Control Channel and at least one other terminal transmits said Physical Random Access Channel at said lower power spectral density or said physical uplink control channel at said lower power spectral density.

16. The method of wireless communication as in any of the previous claims, wherein said first plurality of resource elements comprises all resource elements available in the transmission bandwidth.

17. The method of wireless communication as in any of the previous claims, wherein said power spectral density in said second physical channel is at least 5 dB lower than said given power spectral density.
